# EUROPEAN PATENT APPLICATION

(11) **EP 4 375 782 A1**
(43) Date of publication of application: **29.05.2024**
(21) Application number: 23208506.8
(22) Date of filing: 08.11.2023
(51) Int. Cl.: G05D 1/00, A01B 69/00

(54) **AUTONOMOUS TRAVEL METHOD, WORK VEHICLE, AND AUTONOMOUS TRAVEL SYSTEM**

(30) Priority: 22.11.2022 JP 2022186771
(71) Applicant: Yanmar Holdings Co., Ltd., Osaka-shi, Osaka (JP)
(72) Inventor: SUZUKI, Hidetaka, Okayama-shi (JP); MURAYAMA, Masaaki, Okayama-shi (JP); NISHII, Yasuto, Okayama-shi (JP)
(74) Representative: Dennemeyer & Associates S.A.

(57) **Abstract**

[Problem]An autonomous travel method, a work vehicle, and an autonomous travel system capable of reducing an operation burden on a worker, and smoothly performing reaping traveling in the vicinity of a corner portion of a farm field are provided.

[Solution] In a combine harvester 1, a travel control portion 35 performs control to enable traveling on a plurality of outermost periphery straight-ahead routes 54a extending along a plurality of sides constituting a farm field outline 50, respectively. A route creation portion 47 sets, based on machine body information of the combine harvester 1, a turning necessary area 55 which is necessary for a turn from one outermost periphery straight-ahead route 54a to a next outermost periphery straight-ahead route 54b, and also creates, from a predetermined start point set on the one outermost periphery straight-ahead route 54a toward an unworked land 51 adjacent to an already-worked land 52 which is formed by traveling based on the one outermost periphery straight-ahead route 54a, a predetermined number of inclined routes 56, which are inclined at a predetermined angle relative to the one outermost periphery straight-ahead route 54a, in the turning necessary area 55. The travel control portion 35 performs control to enable autonomous straight-ahead traveling along the inclined route 56.

## Description

### TECHNICAL FIELD

The present invention relates to an autonomous travel method for a work vehicle which performs autonomous traveling in a farm field, the work vehicle, and an autonomous travel system.

### BACKGROUND ART

Work vehicles such as combine harvesters include ones that create an autonomous travel route within a work area in a farm field, and execute autonomous reaping traveling of performing reaping work while traveling autonomously along the autonomous travel route. The work vehicle performs reaping traveling on a straight-ahead route along a farm field outline from a farm field outermost periphery, thereby forming a work area with a predetermined headland width secured from the farm field outline.

For example, Patent Document 1 relates to a travel route generation device which generates a travel route for a work vehicle that travels while working on a work land, and schematically shows a work vehicle autonomous travel system. As for harvesting work at a farm field, an area where a harvester, which is the work vehicle, has traveled by circling around along a boundary line of the farm field while performing the work is set as an outer periphery area, and the inner side of the outer periphery area is set as a work target area. The outer periphery area is used as a movement space and a space for change of direction, etc., of the harvester. In order to secure the outer periphery area, as the first work traveling, the harvester performs traveling of circling around for three or four rounds along the boundary line of the farm field.

### PRIOR ART DOCUMENT

### PATENT DOCUMENT

Patent Document 1: Japanese Unexamined Patent Application Publication No. 2021-83387

### SUMMARY OF INVENTION

### TECHNICAL PROBLEM

In a case where a work vehicle performs reaping traveling (outer periphery reaping traveling) on a straight route along the outermost periphery of a farm field, it is required that no unworked land should be left and the work vehicle should not collide with a ridge. For this reason, manual traveling is performed.

In particular, in the vicinity of a corner portion of the farm field, the work vehicle travels by moving forward and moving backward repetitively. By doing so, it is ensured that no unworked land having unreaped grain culms or the like will be left, and also, an area of an already-worked land which is necessary for a turn from one straight route to another straight route is formed. However, in the manual traveling in which the forward movement and the backward movement are repeatedly performed in the vicinity of the corner portion of the farm field, an operation burden on a worker is increased, and it takes a long time to perform the outer periphery reaping traveling, and the like, and thus the work efficiency is decreased.

An object of the present invention is to provide an autonomous travel method, a work vehicle, and an autonomous travel system capable of reducing an operation burden on a worker, and smoothly performing reaping traveling in the vicinity of a corner portion of a farm field.

### SOLUTION TO PROBLEM

In order to solve the above problem, the autonomous travel method of the present invention pertains to an autonomous travel method of a work vehicle which performs autonomous traveling in a farm field, and is characterized by including: an outermost periphery traveling step of traveling on a plurality of outermost periphery straight-ahead routes extending along a plurality of sides constituting a farm field outline, respectively; an area setting step of setting, on the basis of machine body information of the work vehicle, a turning necessary area which is necessary for a turn from one outermost periphery straight-ahead route of the plurality of outermost periphery straight-ahead routes to a next outermost periphery straight-ahead route of the plurality of outermost periphery straight-ahead routes; a route creation step of creating, from a predetermined start point set on the one outermost periphery straight-ahead route toward an unworked land adjacent to an already-worked land which is formed by traveling based on the one outermost periphery straight-ahead route, a predetermined number of inclined routes, which are inclined at a predetermined angle relative to the one outermost periphery straight-ahead route, in the turning necessary area; and an inclined traveling step of performing autonomous straight-ahead traveling along the inclined route.

Further, in order to solve the above problem, the work vehicle of the present invention pertains to a work vehicle which performs autonomous traveling in a farm field and includes a travel control portion and a route creation portion, and is characterized in that: the travel control portion performs control to enable traveling on a plurality of outermost periphery straight-ahead routes extending along a plurality of sides constituting a farm field outline, respectively; the route creation portion sets, on the basis of machine body information of the work vehicle, a turning necessary area which is necessary for a turn from one outermost periphery straight-ahead route of the plurality of outermost periphery straight-ahead routes to a next outermost periphery straight-ahead route of the plurality of outermost periphery straight-ahead routes; the route creation portion creates, from a predetermined start point set on the one outermost periphery straight-ahead route toward an unworked land adjacent to an already-worked land which is formed by traveling based on the one outermost periphery straight-ahead route, a predetermined number of inclined routes, which are inclined at a predetermined angle relative to the one outermost periphery straight-ahead route, in the turning necessary area; and the travel control portion performs control to enable autonomous straight-ahead traveling along the inclined route.

Furthermore, in order to solve the above problem, the autonomous travel system of the present invention pertains to an autonomous travel system of a work vehicle which performs autonomous traveling in a farm field and includes a travel control portion and a route creation portion, and is characterized in that: the travel control portion performs control to enable traveling on a plurality of outermost periphery straight-ahead routes extending along a plurality of sides constituting a farm field outline, respectively; the route creation portion sets, on the basis of machine body information of the work vehicle, a turning necessary area which is necessary for a turn from one outermost periphery straight-ahead route of the plurality of outermost periphery straight-ahead routes to a next outermost periphery straight-ahead route of the plurality of outermost periphery straight-ahead routes; the route creation portion creates, from a predetermined start point set on the one outermost periphery straight-ahead route toward an unworked land adjacent to an already-worked land which is formed by traveling based on the one outermost periphery straight-ahead route, a predetermined number of inclined routes, which are inclined at a predetermined angle relative to the one outermost periphery straight-ahead route, in the turning necessary area; and the travel control portion performs control to enable autonomous straight-ahead traveling along the inclined route.

### ADVANTAGEOUS EFFECTS OF INVENTION

According to the present invention, there are provided an autonomous travel method, a work vehicle, and an autonomous travel system capable of reducing an operation burden on a worker, and smoothly performing reaping traveling in the vicinity of a corner portion of a farm field.

### BRIEF DESCRIPTION OF DRAWINGS

FIG. 1 is a side view of a combine harvester according to an embodiment of the present invention.
FIG. 2 is a block diagram of a combine harvester according to an embodiment of the present invention.
FIG. 3 is a plan view showing an example of a farm field in which a combine harvester according to an embodiment of the present invention travels.
FIG. 4 is a plan view showing an example of a farm field in which a combine harvester according to an embodiment of the present invention travels.
FIG. 5 is a plan view showing an example of a farm field in which a combine harvester according to an embodiment of the present invention travels.
FIG. 6 is a plan view showing an example of a work screen displayed on a mobile terminal of a combine harvester according to an embodiment of the present invention.
FIG. 7 is a plan view showing an example of the work screen displayed on the mobile terminal of the combine harvester according to an embodiment of the present invention.
FIG. 8 is a flowchart showing an example of an action of the combine harvester according to an embodiment of the present invention.
FIG. 9 is a plan view showing an example of a farm field in which a combine harvester according to another example of the present invention travels.
FIG. 10 is a plan view showing an example of a farm field in which a combine harvester according to yet another example of the present invention travels.

### DESCRIPTION OF EMBODIMENTS

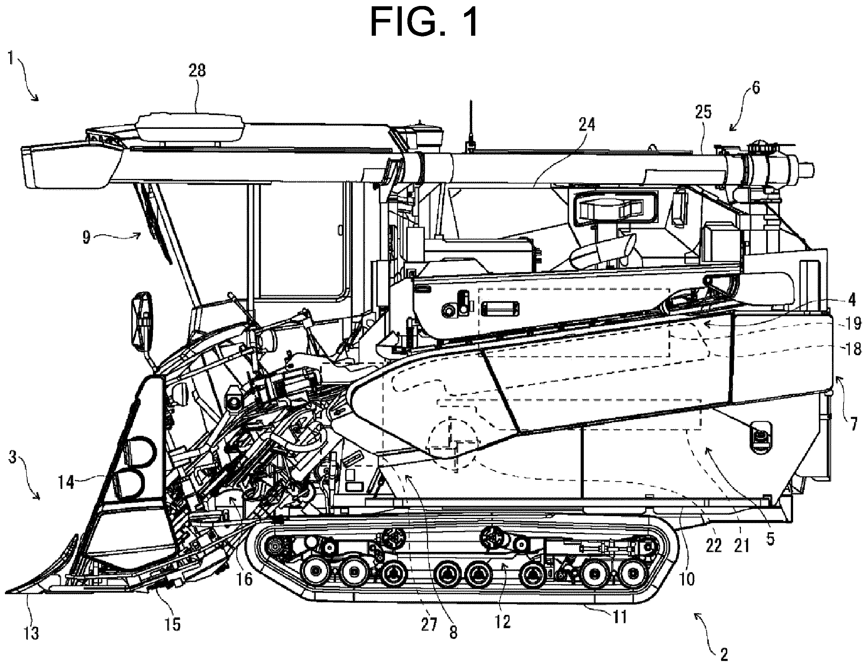

A work vehicle of the present invention performs work while traveling in a farm field, and a combine harvester 1 will be described with reference to FIG. 1 and the like, as an example of the work vehicle according to an embodiment of the present invention. The combine harvester 1 travels in a farm field, which is a work target, in accordance with automated driving or manual operation, and performs work such as reaping, in order to perform the work of harvesting crops from grain culms planted in the farm field. While the combine harvester 1 travels through linear rows in which a predetermined number of rows that is less than or equal to a reapable number of rows is set to a reaping width (a work width) for a plurality of rows of grain culms, the combine harvester 1 performs the reaping work for those rows.

The combine harvester 1 is configured to perform, for example, automated work in which while steering is controlled by automated driving, a traveling speed is controlled according to a manual operation, and unmanned work in which the steering and the traveling speed are both controlled by automated driving. The combine harvester 1 can autonomously travel, turn, and work in the farm field.

In the present embodiment, the combine harvester 1 performs traveling by being set to a traveling mode of any one of a manual traveling mode, an autonomous straight-ahead mode, and an autonomous traveling mode.

When the combine harvester 1 is set to the manual traveling mode, the combine harvester 1 is configured to perform, according to steering of a steering portion 9 by a worker, manual traveling of only performing the traveling or manual reaping traveling accompanied by the reaping work.

When the combine harvester 1 is set to the autonomous straight-ahead mode, the combine harvester 1 is configured to perform autonomous straight-ahead traveling of autonomously performing the reaping while traveling autonomously along an autonomous straight-ahead route parallel to a reference line set in the farm field. For example, when the combine harvester 1 performs autonomous straight-ahead traveling, each side constituting the farm field outline may be applied as a reference line. Further, after the combine harvester 1 has performed the autonomous straight-ahead traveling on an autonomous straight-ahead route that is closest to the nearest reference line (i.e., the current outermost periphery straight-ahead route), the combine harvester 1 performs, in a turning necessary area necessary for enabling a turn to the next outermost periphery straight-ahead route, the autonomous straight-ahead traveling along an inclined route that is inclined relative to the current outermost periphery straight-ahead route.

When the combine harvester 1 is set to the autonomous traveling mode, the combine harvester 1 is configured to perform autonomous reaping traveling of autonomously performing the reaping while traveling autonomously along an autonomous travel route set in the farm field. For example, the combine harvester 1 performs the autonomous reaping traveling of a traveling pattern, such as reciprocating reaping of reciprocatively moving through a plurality of straight-ahead routes in an unreaped land (an unworked land) having unreaped grain culms in the farm field, or round reaping of repeating circling around through the straight-ahead route along the inner periphery of the unreaped land by gradually shifting the circling around toward the central side of the unreaped land. Before the combine harvester 1 performs the autonomous reaping traveling, the combine harvester 1 performs outer periphery reaping traveling which is to travel while performing the reaping by circling around along the outer peripheral shape of the farm field. By doing so, a headland is formed in the farm field, and the inner side of the headland is set to a work area for the autonomous reaping traveling.

As illustrated in FIG. 1, the combine harvester 1 is provided with a traveling portion 2, a reaping portion 3, which is a working portion, a threshing portion 4, a sorting portion 5, an accumulation portion 6, a waste straw processing portion 7, a power portion 8, and a steering portion 9, and is configured as the so-called head-feeding type combine harvester. While the combine harvester 1 travels by the traveling portion 2, the combine harvester 1 threshes, by the threshing portion 4, grain culms reaped by the reaping portion 3, sorts the grains by the sorting portion 5, and accumulates the grains in the accumulation portion 6. The combine harvester 1 processes waste straw produced after threshing by the waste straw processing portion 7. By the power supplied by the power portion 8, the combine harvester 1 drives the traveling portion 2, the reaping portion 3, the threshing portion 4, the sorting portion 5, the accumulation portion 6, and the waste straw processing portion 7.

The traveling portion 2 is provided below a machine body frame 10, and includes a left-and-right pair of crawler-type traveling devices 11 and a transmission (not shown). By the power (for example, rotative power) transmitted from an engine 27 of the power portion 8, the traveling portion 2 rotates a crawler of the crawler-type traveling devices 11, thereby making the combine harvester 1 travel in a front-rear direction or making the same turn in a left-right direction. The transmission transmits the power (rotative power) of the power portion 8 to the crawler-type traveling devices 11 and can also shift the rotative power.

The reaping portion 3 is provided on the machine body frame 10 in front of the traveling portion 2, and performs the reaping work for rows that is less than or equal to a reapable number of rows. The reaping portion 3 is provided with a divider 13, a raising device 14, a cutting device 15, and a conveyance device 16. The divider 13 separates grain culms in the farm field for each row, and guides the grain culms of a predetermined number of rows that is less than or equal to a reapable number of rows to the raising device 14. The raising device 14 raises the grain culms guided by the divider 13. The cutting device 15 cuts the grain culms raised by the raising device 14. The conveyance device 16 conveys the grain culms that have been cut by the cutting device 15 to the threshing portion 4.

The threshing portion 4 is provided behind the reaping portion 3. The threshing portion 4 is provided with a feed chain 18 and a threshing cylinder 19. The feed chain 18 conveys the grain culms conveyed from the conveyance device 16 of the reaping portion 3 for threshing, and further conveys the threshed grain culms, in other words, waste straw, to the waste straw processing portion 7. The threshing cylinder 19 threshes the grain culms being conveyed by the feed chain 18.

The sorting portion 5 is provided below the threshing portion 4. The sorting portion 5 is provided with a shake sorting device 21, an air blow sorting device 22, a grain conveyance device (not shown), and a straw scraps discharge device (not shown). The shake sorting device 21 sieves threshed products dropped from the threshing portion 4 and sorts the threshed products into grains and straw scraps and the like. The air blow sorting device 22 further sorts the threshed products sorted by the shake sorting device 21 into grains and straw scraps and the like by air blow. The grain conveyance device conveys the grains sorted out by the shake sorting device 21 and the air blow sorting device 22 to the accumulation portion 6. The straw scraps discharge device discharges the straw scraps and the like sorted out by the shake sorting device 21 and the air blow sorting device 22 to the outside of the machine.

The accumulation portion 6 is provided on the right side of the threshing portion 4. The accumulation portion 6 is provided with a grain tank 24 and a discharge device 25. The grain tank 24 accumulates the grains conveyed from the sorting portion 5. The discharge device 25 is composed of an auger or the like, and discharges the grains accumulated in the grain tank 24 to an arbitrary place.

The waste straw processing portion 7 is provided behind the threshing portion 4. The waste straw processing portion 7 is provided with a waste straw conveyance device (not shown) and a waste straw cutting device (not shown). The waste straw conveyance device conveys the waste straw conveyed from the feed chain 18 of the threshing portion 4 to the waste straw cutting device. The waste straw cutting device cuts the waste straw conveyed by the waste straw conveyance device, and discharges the cut waste straw to the outside of the machine.

The power portion 8 is provided above the traveling portion 2 and in front of the accumulation portion 6. The power portion 8 is provided with the engine 27 which generates rotative power. The power portion 8 transmits the rotative power generated by the engine 27 to the traveling portion 2, the reaping portion 3, the threshing portion 4, the sorting portion 5, the accumulation portion 6, and the waste straw processing portion 7.

The steering portion 9 is provided above the power portion 8. Around a driver's seat, which is a seat on which a worker is seated, the steering portion 9 includes, as travel operation portions for steer control on the traveling of the combine harvester 1, a steering wheel for giving an instruction to turn a machine body of the combine harvester 1, a main gearshift lever and a sub-gearshift lever for giving an instruction to change the speed of forward and backward movement of the combine harvester 1, and the like. In addition, the steering portion 9 is provided with a work operation portion to operate an elevating/lowering action of the reaping portion 3, reaping work by the reaping portion 3, threshing work by the threshing portion 4, discharge work by the discharge device 25 of the accumulation portion 6, and the like. When the manual traveling mode is set, the power portion 8 and the traveling portion 2 are driven according to the operation of the travel operation portions of the steering portion 9 to execute the manual traveling of the combine harvester 1, and the power portion 8 and the reaping portion 3 are driven according to the operation of the work operation portion to execute the manual work by the combine harvester 1.

The combine harvester 1 is provided with a positioning unit 28 which uses a satellite positioning system such as a GPS to acquire a vehicle position of the combine harvester 1 itself. The positioning unit 28 receives a positioning signal from a positioning satellite via a positioning antenna, and acquires positional information of the positioning unit 28, i.e., a vehicle position of the combine harvester 1 itself, on the basis of the positioning signal.

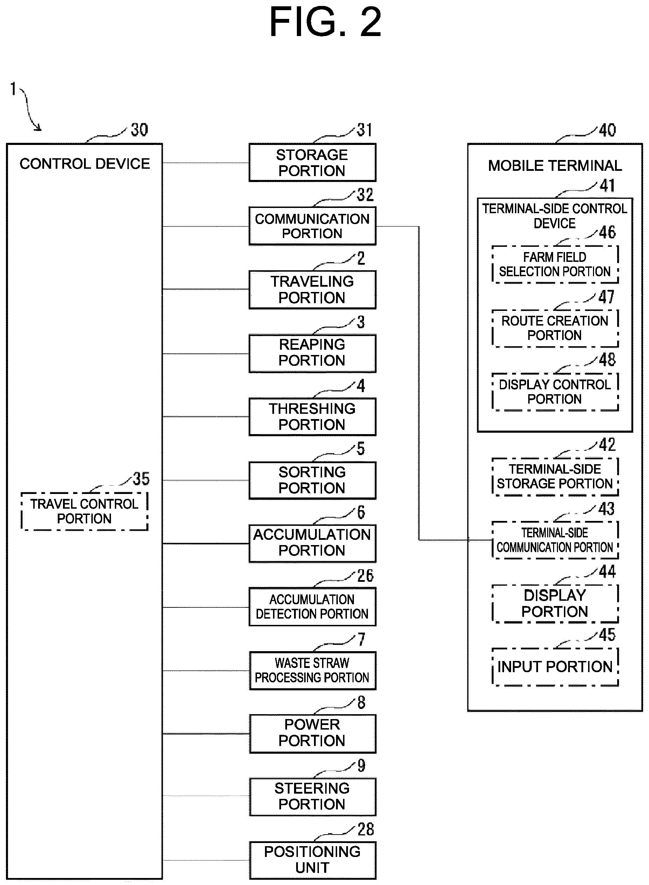

Next, a control device 30 of the combine harvester 1 will be described with reference to FIG. 2. The control device 30 is configured from a computer such as a CPU, and is connected to a storage portion 31 such as a ROM, a RAM, a hard disk drive, and a flash memory, and also to a communication portion 32 which communicates with an external device.

The storage portion 31 stores a program and data for controlling various constituent elements and various functions of the combine harvester 1. The control device 30 executes arithmetic processing on the basis of the program and data stored in the storage portion 31, thereby controlling the various constituent elements and the various functions. The control device 30 acquires, for example, the vehicle position of the combine harvester 1 itself from the positioning unit 28 and also acquires a traveling direction at the vehicle position of the combine harvester 1 itself.

The communication portion 32 is enabled to wirelessly communicate with an external device, such as a mobile terminal 40 possessed by the worker, via a wireless communication antenna. The control device 30 controls the communication portion 32 to perform wireless communication with the mobile terminal 40, and transmits and receives various kinds of information to and from the mobile terminal 40. For example, the communication portion 32 receives farm field information set for the farm field and the autonomous straight-ahead route and the inclined route, or the autonomous travel route, etc., from the mobile terminal 40, and stores the received information and routes in the storage portion 31.

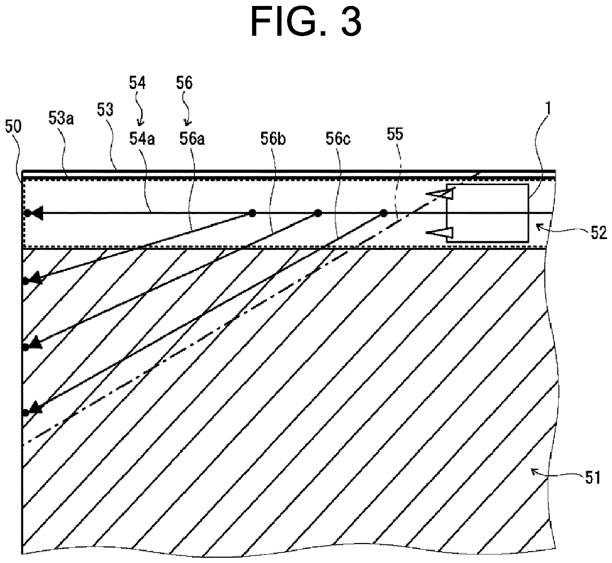

For example, as illustrated in FIGS. 3 to 5, the farm field includes, within a farm field outline 50, which is a shape along the outer periphery of the farm field, an unworked land 51 in which work such as reaping has not been performed yet and an already-worked land 52 in which the work has already been finished. The farm field information includes information such as the shape, size, and positional information (coordinates, etc.) of the farm field outline 50, and the shape, size, and positional information (coordinates, etc.) of the unworked land 51 and the already-worked land 52. An autonomous straight-ahead route 54, an inclined route 56, and the autonomous travel route set for the farm field include travel information related to traveling and work information related to work such as autonomous reaping. The travel information includes, in addition to travel locations in the farm field, the traveling direction and a set vehicle speed at each travel location. The work information includes information related to activation or a stop of various kinds of work such as reaping work at each travel location, and information related to the elevating/lowering action of the reaping portion 3.

Also, the control device 30 acts as a travel control portion 35 by executing the program stored in the storage portion 31. The travel control portion 35 implements an outermost periphery traveling step and an inclined traveling step of an autonomous travel method according to the present invention.

When the autonomous straight-ahead mode is set, the travel control portion 35 controls the autonomous straight-ahead traveling of the combine harvester 1. For example, the travel control portion 35 acquires, from the mobile terminal 40, the farm field information set for the farm field, and the autonomous straight-ahead route 54 and the inclined route 56 related to a reference line 53 set for the farm field. When the autonomous straight-ahead traveling is started according to the operation of the mobile terminal 40, the travel control portion 35 acquires the vehicle position of the combine harvester 1 itself from the positioning unit 28, and controls the power portion 8, the traveling portion 2, and the reaping portion 3 such that the combine harvester 1 performs, on the basis of the vehicle position of its own, the farm field information, the autonomous straight-ahead route 54, and the inclined route 56, the autonomous straight-ahead traveling along the autonomous straight-ahead route 54 and the inclined route 56.

When the autonomous traveling mode is set, the travel control portion 35 controls the autonomous reaping traveling of the combine harvester 1. For example, the travel control portion 35 acquires the farm field information and the autonomous travel route set for the farm field from the mobile terminal 40. When the autonomous reaping traveling is started according to the operation of the mobile terminal 40, the travel control portion 35 acquires the vehicle position of the combine harvester 1 itself from the positioning unit 28, and controls the power portion 8, the traveling portion 2, and the reaping portion 3 such that the combine harvester 1 performs, on the basis of the vehicle position of its own, the farm field information, and the autonomous travel route, the autonomous reaping traveling along the autonomous travel route.

Further, when the autonomous straight-ahead mode is set, the travel control portion 35 performs control to stop the autonomous straight-ahead traveling of the combine harvester 1 according to the operation of the travel operation portion such as the main gearshift lever.

While the autonomous straight-ahead traveling of the combine harvester 1 is being performed, the travel control portion 35 may execute, in accordance with a steering wheel operation or the like, an override function to cancel the autonomous straight-ahead traveling and switch the traveling to manual traveling. When the combine harvester 1 reaches and stops at an end point of the autonomous straight-ahead route 54 that is closest to the reference line 53 (i.e., an outermost periphery straight-ahead route 54a) by the autonomous straight-ahead traveling, the travel control portion 35 may control the power portion 8 and the traveling portion 2 such that backward traveling along the outermost periphery straight-ahead route 54a is autonomously started according to a backward movement operation of the main gearshift lever. At this time, the combine harvester 1 may notify the worker that backward traveling is to be started autonomously by a display or voice output.

Also, in a case where a start point of the inclined route 56 is set in advance, the travel control portion 35 may perform control so as to stop the backward traveling when the combine harvester 1 has reached the start point of the inclined route 56 by the backward traveling. At this time, the combine harvester 1 may notify the worker that the backward traveling is to be stopped autonomously by a display or voice output.

Alternatively, the combine harvester 1 may perform the backward traveling on the outermost periphery straight-ahead route 54a by manual traveling. The combine harvester 1 may notify the worker that the combine harvester 1 has reached the start point of the inclined route 56 in the backward traveling over the outermost periphery straight-ahead route 54a by a display or voice output.

Further, in a case where the autonomous straight-ahead mode is set and the inclined route 56 is set relative to the outermost periphery straight-ahead route 54a, the travel control portion 35 acquires the inclined route 56 from the mobile terminal 40, and controls the power portion 8, the traveling portion 2, and the reaping portion 3 such that the combine harvester 1 performs the autonomous straight-ahead traveling along the inclined route 56. When the combine harvester 1 reaches and stops at an end point of the inclined route 56, the travel control portion 35 may control the power portion 8 and the traveling portion 2 such that backward traveling along the inclined route 56 is autonomously started according to a backward movement operation of the main gearshift lever. Alternatively, the combine harvester 1 may perform the backward traveling on the inclined route 56 by manual traveling. The combine harvester 1 may notify the worker that the combine harvester 1 has reached the start point of the inclined route 56 in the backward traveling over the inclined route 56 by a display or voice output.

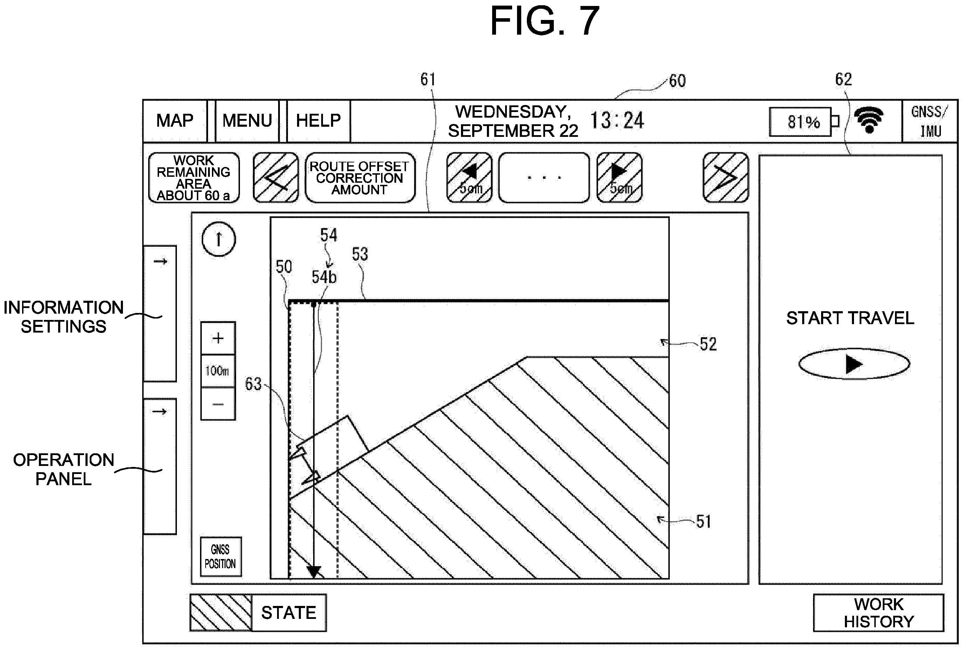

When the autonomous straight-ahead traveling on the current outermost periphery straight-ahead route 54a is finished, and further, reaping traveling on the inclined route 56 that has been created in a turning necessary area 55 set with respect to the current outermost periphery straight-ahead route 54a is finished, so that the already-worked land 52 is secured in the turning necessary area 55, the combine harvester 1 is normally made to turn toward the next outermost periphery straight-ahead route 54b (see FIG. 7) by manual traveling. Then, when a condition for proceeding to the next autonomous straight-ahead route 54b (e.g., at least one's own vehicle position relative to the next autonomous straight-ahead route 54b is within a predetermined lateral deviation and/or within a predetermined azimuth angle) is satisfied, the combine harvester 1 proceeds to the autonomous straight-ahead traveling on the next outermost periphery straight-ahead route 54b and performs the reaping traveling either automatically or according to a start operation of the travel operation portion or an input portion 45 by the worker.

Alternatively, when the combine harvester 1 finishes the reaping traveling on the inclined route 56, the travel control portion 35 may autonomously perform turn traveling toward the next outermost periphery straight-ahead route 54b either according to an operation of the mobile terminal 40 or an operation of the travel operation portion. In this case, the travel control portion 35 controls the power portion 8 and the traveling portion 2 such that the combine harvester 1 is autonomously made to turn to the position of the next outermost periphery straight-ahead route 54b in the already-worked land 52, after the combine harvester 1 has finished the backward traveling along the last inclined route 56, and autonomously stops when the turning is finished.

Alternatively, the travel control portion 35 controls the power portion 8 and the traveling portion 2 such that the combine harvester 1 is autonomously made to turn to the position of the next outermost periphery straight-ahead route 54b in the already-worked land 52, after making the combine harvester 1 travel backward within a range of the already-worked land 52 irrespective of the last inclined route 56, and autonomously stops when the turning is finished. The combine harvester 1 may notify the worker that backward traveling from an end point of the last inclined route 56 and turn traveling to the next outermost periphery straight-ahead route 54b are to be performed autonomously, and the turn traveling is to be stopped autonomously by a display or voice output. Further, when the combine harvester 1 has moved to the next outermost periphery straight-ahead route 54b, the travel control portion 35 may control the power portion 8, the traveling portion 2, and the reaping portion 3 such that the autonomous straight-ahead traveling on the next outermost periphery straight-ahead route 54b is performed continuously.

When the combine harvester 1 performs the autonomous straight-ahead traveling on the inclined route 56, the travel control portion 35 controls a rolling mechanism provided in the traveling portion 2, an elevating/lowering device provided in the reaping portion 3, and the like. By doing so, the travel control portion 35 may control one side of the reaping portion 3 in a machine body width direction of the combine harvester 1 to be raised, and the other side of the reaping portion 3 to be a normal reaping height. Specifically, when the one side of the reaping portion 3 in the machine body width direction of the combine harvester 1 passes through the already-worked land 52 and the other side passes through the unworked land 51, the travel control portion 35 performs control such that the one side of the reaping portion 3 is raised. Further, when the one side of the reaping portion 3 enters the unworked land 51, the travel control portion 35 automatically restores the inclination of the reaping portion 3 and makes the reaping portion 3 horizontal in the machine body width direction with respect to the farm field surface (the ground).

The mobile terminal 40 is one of the constituent elements of the combine harvester 1, is a terminal that can remotely operate the combine harvester 1, and is composed of, for example, a tablet terminal provided with a touch panel, a laptop personal computer, or the like. An operation device similar to the mobile terminal 40 may be provided in the steering portion 9. In the present invention, an autonomous travel system is configured by the combine harvester 1 and the mobile terminal 40.

As illustrated in FIG. 2, the mobile terminal 40 is provided with a terminal-side control device 41 configured from a computer such as a CPU. The terminal-side control device 41 is connected to a terminal-side storage portion 42 such as a ROM, a RAM, a hard disk drive, and a flash memory, and also to a terminal-side communication portion 43 which communicates with an external device. Further, the mobile terminal 40 is provided with a display portion 44, such as a touch panel or a monitor, for displaying various kinds of information and outputting the information to the worker. The mobile terminal 40 is also provided with the input portion 45, such as a touch panel or an operation key, for receiving an input operation of various kinds of information from the worker.

The terminal-side storage portion 42 stores a program and data for controlling various constituent elements and various functions of the mobile terminal 40. The terminal-side control device 41 executes arithmetic processing on the basis of the program and data stored in the terminal-side storage portion 42, thereby controlling the various constituent elements and the various functions of the mobile terminal 40. The terminal-side storage portion 42 stores the farm field information on a farm field, which is a work target of the combine harvester 1, the autonomous straight-ahead route 54, and the autonomous travel route.

The terminal-side communication portion 43 is communicably connected to the communication portion 32 of the combine harvester 1 via a wireless communication antenna. The terminal-side control device 41 controls the terminal-side communication portion 43 to perform wireless communication with the combine harvester 1, and transmits and receives various kinds of information to and from the combine harvester 1.

The terminal-side control device 41 of the mobile terminal 40 acts as a farm field selection portion 46, a route creation portion 47, and a display control portion 48 by executing the program stored in the terminal-side storage portion 42. Note that the route creation portion 47 implements an area setting step and a route creation step of the autonomous travel method according to the present invention, and the display control portion 48 functions as a display step of the autonomous travel method according to the present invention.

The farm field selection portion 46 manually or automatically selects a farm field which is to be adopted as a work target of the autonomous traveling, sets the outer peripheral shape of the farm field, in other words, the farm field outline 50, and stores the set farm field outline 50 in the terminal-side storage portion 42. For example, the farm field selection portion 46 displays, on the display portion 44, a farm field selection screen (not shown) for selection of a farm field which is to be adopted as the work target. The farm field selection screen allows, when the farm field information including the farm field outline 50 is already stored in the terminal-side storage portion 42, selection of the farm field corresponding to that farm field information. When any of the farm fields is selected on the farm field selection screen according to a manual operation, the farm field selection portion 46 selects the farm field which has been selectively operated as the work target, and reads the farm field information corresponding to the selected farm field from the terminal-side storage portion 42.

Also, the farm field selection screen allows an operation of creating a new farm field. When creation of a new farm field is operated on the farm field selection screen, the farm field selection portion 46 selects a new farm field including the vehicle position of the combine harvester 1 itself as the work target. Further, when the combine harvester 1 performs outer periphery reaping traveling by circling around along the outer peripheral shape of the new farm field, the farm field selection portion 46 receives, from the combine harvester 1, the vehicle position of the combine harvester 1 itself measured by the positioning unit 28 of the combine harvester 1, and records the positional information of the outer peripheral shape of the new farm field and the positional information of the route of the outer periphery reaping traveling. The farm field selection portion 46 creates the farm field outline 50 of the new farm field on the basis of the positional information acquired by the outer periphery reaping traveling, creates the farm field information including the farm field outline 50, and stores the farm field information in the terminal-side storage portion 42.

When the autonomous straight-ahead mode is set, as illustrated in FIGS. 3 to 5, the route creation portion 47 creates the autonomous straight-ahead route 54 based on a predetermined reference line 53, stores the autonomous straight-ahead route 54 in the terminal-side storage portion 42, and transmits the created autonomous straight-ahead route 54 to the combine harvester 1 via the communication portion 32. For example, the route creation portion 47 creates, over the entire area of the farm field, the autonomous straight-ahead route 54 consisting of a plurality of straight-ahead routes that are straight lines parallel to the reference line 53, and are arranged at intervals of a work width of the combine harvester 1 from the reference line 53. Considering that the center of the combine harvester 1 in the left-right direction passes through the autonomous straight-ahead route 54, the route creation portion 47 arranges the autonomous straight-ahead route 54 (the outermost periphery straight-ahead route 54a) that is closest to the reference line 53 at an interval of half the work width of the combine harvester 1 from the reference line 53, and arranges the other autonomous straight-ahead routes 54 at intervals of the work width of the combine harvester 1 sequentially. Alternatively, the route creation portion 47 may create, over the entire area of the farm field, the autonomous straight-ahead route 54, which is a straight line parallel to the reference line 53, and consists of a straight-ahead route that passes through the vehicle position of the combine harvester 1 itself and a plurality of straight-ahead routes arranged at intervals of the work width of the combine harvester 1 from the aforementioned straight-ahead route.

For example, when the autonomous straight-ahead mode is set in order for the combine harvester 1 to perform outer periphery reaping traveling which forms a headland in the farm field, the route creation portion 47 creates the autonomous straight-ahead route 54 such that the combine harvester 1 performs autonomous straight-ahead traveling corresponding to the outer periphery reaping traveling. At this time, the route creation portion 47 sets, on the basis of the farm field information on the farm field selected by the farm field selection portion 46, each side (external side) which constitutes the farm field outline 50 to the reference line 53. Note that, as illustrated in FIGS. 3 to 5, the route creation portion 47 may create the autonomous straight-ahead route 54 (the outermost periphery straight-ahead route 54a) with a predetermined safety margin 53a secured from the reference line 53, which is the external side. Alternatively, the route creation portion 47 may create the autonomous straight-ahead route 54 (the outermost periphery straight-ahead route 54a) with the safety margin 53a secured from an external side by applying a straight line that is parallel and for which the safety margin 53a is secured from the external side to the reference line 53. In the present embodiment, among a plurality of autonomous straight-ahead routes 54, the outermost periphery straight-ahead route 54a will be described in detail. Therefore, illustration of the other autonomous straight-ahead routes 54 is omitted in FIGS. 3 to 5.

Further, in a case where a predetermined creation condition is satisfied, the route creation portion 47 sets, on the basis of the machine body information of the combine harvester 1, the turning necessary area 55 which is necessary for a turn from the autonomous straight-ahead route 54 that is closest to the external side corresponding to the reference line 53 (i.e., the current outermost periphery straight-ahead route 54a) to the next outermost periphery straight-ahead route 54b.

Then, in a case where the predetermined creation condition is satisfied, the route creation portion 47 creates the inclined route 56 that is inclined relative to the current outermost periphery straight-ahead route 54a in the turning necessary area 55. The route creation portion 47 stores the set turning necessary area 55 in the terminal-side storage portion 42, and also stores the created inclined route 56 in the terminal-side storage portion 42 in association with the turning necessary area 55.

For example, the route creation portion 47 sets an area obtained by connecting a first point on the external side corresponding to the current reference line 53, a second point on the external side corresponding to the next reference line 53, and an intersection point of the current reference line 53 and the next reference line 53 as the turning necessary area 55. At this time, the route creation portion 47 calculates and sets a first distance from the intersection point to the first point and a second distance from the intersection point to the second point, on the basis of the machine body information such as the machine body length and a turning radius of the combine harvester 1, so that the combine harvester 1 can make a turn from the current outermost periphery straight-ahead route 54a to the next outermost periphery straight-ahead route 54b without contacting the farm field outline 50 or the unworked land 51. Other than the above way, the route creation portion 47 may set the second point by setting the second distance, which is separated from the intersection point by a predetermined number (for example, four) of work widths of the combine harvester 1, on the external side corresponding to the next reference line 53. Alternatively, the route creation portion 47 may set the turning necessary area 55 according to a setting operation made via a predetermined display screen that is displayed on the display portion 44, and may allow, for example, the first point and the second point to be set.

In contrast to the already-worked land 52 which is formed by the autonomous straight-ahead traveling based on the current outermost periphery straight-ahead route 54a, the unworked land 51 which continues along the next outermost periphery straight-ahead route 54b remains. Thus, the route creation portion 47 sets a start point of the inclined route 56 on the current outermost periphery straight-ahead route 54a, and creates a predetermined number of inclined routes 56 that are inclined at a predetermined angle toward the unworked land 51 of the next outermost periphery straight-ahead route 54b. In other words, the route creation portion 47 creates the inclined routes 56 for enabling the reaping traveling of the unworked land 51 in the turning necessary area 55.

After setting an end point of the inclined route 56, the route creation portion 47 sets a start point corresponding to the end point, and then creates the inclined route 56 by selecting and connecting the start point and the end point. The route creation portion 47 sets the end point of the inclined route 56 to an area excluding the already-worked land 52 which is formed by the autonomous straight-ahead traveling based on the current outermost periphery straight-ahead route 54a within the turning necessary area 55, in other words, the unworked land 51 within the turning necessary area 55. For example, the route creation portion 47 sets the end point of each of the inclined routes 56 at intervals of the work width of the combine harvester 1 on the next outermost periphery straight-ahead route 54b. Considering that the center of the combine harvester 1 in the left-right direction passes through the inclined route 56, the route creation portion 47 sets the end point for the inclined route 56 that is closest to the current outermost periphery straight-ahead route 54a at an interval of the work width of the combine harvester 1 from the current outermost periphery straight-ahead route 54a, and sets the end points for the subsequent inclined routes 56 at intervals of the work width of the combine harvester 1 sequentially.

The route creation portion 47 sets the start point of the inclined route 56 at a position spaced apart from the end point of the current outermost periphery straight-ahead route 54a by a predetermined minimum distance or more. As a start point setting mode for setting the start point of the inclined route 56, the route creation portion 47 allows selection of one of the modes from a predefined position mode, which sets the start point to a position spaced apart from the end point of the current outermost periphery straight-ahead route 54a by a preset separation distance, and a one's own vehicle position mode, which sets the start point to the vehicle position of the combine harvester 1 itself. For example, the route creation portion 47 allows the start point setting mode to be selected according to a selection operation made via the predetermined display screen that is displayed on the display portion 44, for example.

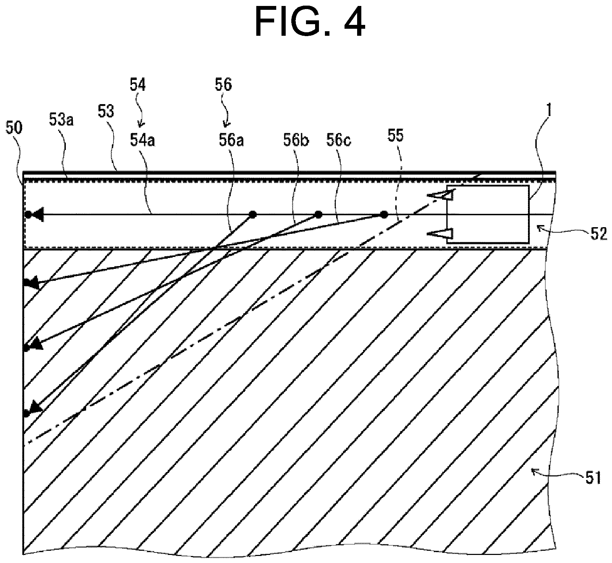

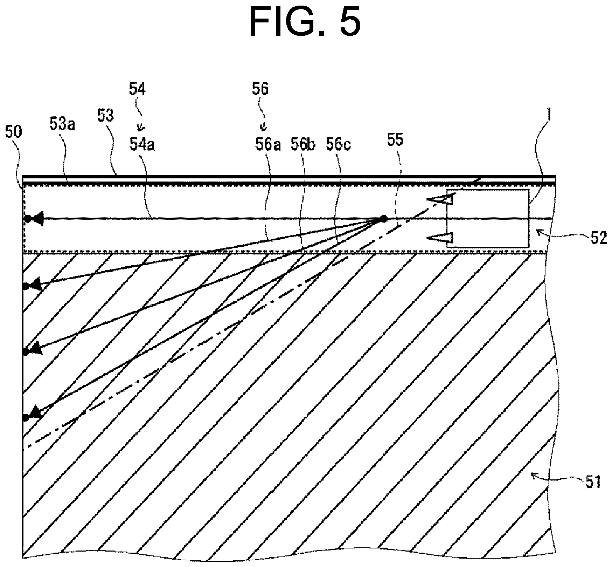

When the predefined position mode is selected, the route creation portion 47 calculates a minimum predetermined number of inclined routes 56 necessary for performing the reaping traveling of the unworked land 51 in the turning necessary area 55. For example, the route creation portion 47 calculates the predetermined number of inclined routes 56 on the basis of the turning necessary area 55 and the machine body information of the combine harvester 1. Also, the route creation portion 47 sets, with respect to respective end points of the predetermined number of inclined routes 56 set to the unworked land 51 within the turning necessary area 55, corresponding start points. At this time, in order to perform the reaping traveling over the entire area of the unworked land 51 in the turning necessary area 55, the route creation portion 47 sets each start point such that the predetermined number of inclined routes 56 are arranged without a gap in the unworked land 51, and creates the predetermined number of inclined routes 56 connecting between the start points and the end points. The route creation portion 47 may set a different start point for each inclined route 56, as illustrated in FIGS. 3 and 4, or may set a common start point for each of the inclined routes 56, as illustrated in FIG. 5.

For example, the route creation portion 47 may set a separation distance from an end point of the current outermost periphery straight-ahead route 54a to a start point of each of the inclined routes 56 to a predefined value set in advance. Alternatively, the route creation portion 47 may calculate the separation distance to the start point of each of the inclined routes 56 on the basis of the machine body information such as the work width, the machine body length, and the turning radius of the combine harvester 1. For example, by setting a predetermined angle for each of the inclined routes 56, the route creation portion 47 may set the start point of each of the inclined routes 56, on the basis of the current outermost periphery straight-ahead route 54a, the end point of the inclined route 56, and the predetermined angle. The route creation portion 47 may set the predetermined angle of each of the inclined routes 56 to a predefined value on the basis of the machine body information of the combine harvester 1, or may allow the predetermined angle of each of the inclined routes 56 to be set according to a setting operation made via a predetermined display screen that is displayed on the display portion 44 or an operation of a physical switch provided on the input portion 45.

Further, as illustrated in FIGS. 3 and 5, the route creation portion 47 creates the inclined routes 56a, 56b, and 56c, respectively, by connecting the start point of the inclined route 56 close to the end point of the current outermost periphery straight-ahead route 54a and the end point of the inclined route 56 close to the end point of the current outermost periphery straight-ahead route 54a, in other words, creates the inclined routes 56c, 56b, and 56a, respectively, by connecting the start point of the inclined route 56 far from the end point of the current outermost periphery straight-ahead route 54a and the end point of the inclined route 56 far from the end point of the current outermost periphery straight-ahead route 54a. Alternatively, as illustrated in FIG. 4, the route creation portion 47 may create the inclined routes 56a, 56b, and 56c, respectively, by connecting the start point of the inclined route 56 close to the end point of the current outermost periphery straight-ahead route 54a and the end point of the inclined route 56 far from the end point of the current outermost periphery straight-ahead route 54a, in other words, may create the inclined routes 56c, 56b, and 56a, respectively, by connecting the start point of the inclined route 56 far from the end point of the current outermost periphery straight-ahead route 54a and the end point of the inclined route 56 close to the end point of the current outermost periphery straight-ahead route 54a.

The route creation portion 47 may set in advance a travel order in which the reaping traveling is to be performed for the created predetermined number of inclined routes 56, and store the travel order in the terminal-side storage portion 42 in association with the inclined routes 56. For example, the route creation portion 47 sets the travel order of the predetermined number of inclined routes 56 in the order of closeness of the start point of the inclined route 56 to the current outermost periphery straight-ahead route 54a. More specifically, in the examples illustrated in FIGS. 3 to 5, the travel order is set in the order of the inclined routes 56a, 56b, and 56c. Other than the above order, the route creation portion 47 may set the travel order of the predetermined number of inclined routes 56 in the order of farness of the start point of the inclined route 56 from the current outermost periphery straight-ahead route 54a. More specifically, in the examples illustrated in FIGS. 3 to 5, the travel order is set in the order of the inclined routes 56c, 56b, and 56a. Alternatively, the route creation portion 47 may allow the travel order of the predetermined number of inclined routes 56 to be set according to a setting operation made via the predetermined display screen that is displayed on the display portion 44.

When the one's own vehicle position mode is selected, the route creation portion 47 sets the start point of the inclined route 56 to the vehicle position of the combine harvester 1 itself on the current outermost periphery straight-ahead route 54a. Specifically, the route creation portion 47 sets the start point to a position where the combine harvester 1 stops when the combine harvester 1 performs backward traveling on the current outermost periphery straight-ahead route 54a after performing reaping traveling on the current outermost periphery straight-ahead route 54a by autonomous straight-ahead traveling or manual traveling, and reaching the end point of the current outermost periphery straight-ahead route 54a.

Then, the route creation portion 47 creates the inclined route 56 connecting, among the end points of the predetermined number of inclined routes 56 set in the unworked land 51 within the turning necessary area 55, the end point of the inclined route 56 that is closest to the already-worked land 52 including the current outermost periphery straight-ahead route 54a and the start point based on the one's own vehicle position. Next, after the combine harvester 1 has finished the reaping traveling on the inclined route 56, the route creation portion 47 creates the inclined route 56 connecting the end point of the inclined route 56, which is next closest to the already-worked land 52 including the current outermost periphery straight-ahead route 54a, and the start point based on the one's own vehicle position. In this way, the route creation portion 47 selects, in order, the end points of the respective inclined routes 56 set in the unworked land 51 within the turning necessary area 55, and sequentially creates the inclined routes 56 connected to the start point based on the one's own vehicle position.

Further, irrespective of the start point setting mode, the route creation portion 47 may set the start point of the inclined route 56 such that the combine harvester 1 arranged at the start point of the inclined route 56 does not overlap the farm field outline 50 in a state in which the combine harvester 1 is inclined at a predetermined angle of the inclined route 56. For example, the route creation portion 47 adjusts the machine body center of the combine harvester 1 to the start point of the inclined route 56 by a simulation, inclines the combine harvester 1 at a predetermined angle of the inclined route 56, and further calculates the positional information of the machine body outer shape of the combine harvester 1 on the basis of the machine body length and the machine body width of the combine harvester 1. Then, the route creation portion 47 determines whether or not the positional information of the machine body outer shape of the combine harvester 1 overlaps the farm field outline 50 by a simulation.

The closer the start point of the inclined route 56 is to the end point of the outermost periphery straight-ahead route 54a, the greater the predetermined angle becomes with respect to the outermost periphery straight-ahead route 54a. Thus, the greater the predetermined angle is with respect to the outermost periphery straight-ahead route 54a, the more it is likely that the machine body outer shape of the combine harvester 1 will overlap the farm field outline 50. Therefore, when it is determined by the route creation portion 47 that the positional information of the machine body outer shape of the combine harvester 1 overlaps the farm field outline 50, the route creation portion 47 increases the separation distance from the end point of the outermost periphery straight-ahead route 54a to the start point of the inclined route 56, and resets the start point of the inclined route 56 such that the machine body outer shape of the combine harvester 1 does not overlap the farm field outline 50.

In addition, the route creation portion 47 sets a predetermined creation condition for setting the turning necessary area 55 and creating the inclined route 56 to a timing when the combine harvester 1 reaches the end point of the outermost periphery straight-ahead route 54a by the autonomous straight-ahead traveling or manual traveling based on the autonomous straight-ahead route 54 (the outermost periphery straight-ahead route 54a) that is closest to one external side of the farm field which serves as the reference line 53. Other than the above timing, the route creation portion 47 may set a timing when the combine harvester 1 has started the autonomous straight-ahead traveling or manual traveling on the outermost periphery straight-ahead route 54a, a timing when the combine harvester 1 has performed the autonomous straight-ahead traveling or manual traveling on the outermost periphery straight-ahead route 54a for a predetermined distance or a predetermined length or time, or a timing when the combine harvester 1 has performed backward traveling for a predetermined distance or a predetermined length or time after reaching the end point of the outermost periphery straight-ahead route 54a, to the predetermined creation condition.

Alternatively, the route creation portion 47 may acquire, by the farm field selection portion 46, the farm field outline 50 by acquiring farm field information on the farm field to be adopted as the work target of the autonomous traveling, and also set a timing when the outermost periphery straight-ahead route 54a has been created and set on the basis of the farm field outline 50 to the predetermined creation condition.

Further, the route creation portion 47 may create, when the combine harvester 1 has finished the reaping traveling on the inclined route 56 created in the turning necessary area 55 set with respect to the current outermost periphery straight-ahead route 54a and the already-worked land 52 is secured in the turning necessary area 55, a backward traveling route for making the combine harvester 1 travel backward along the last inclined route 56 or a backward traveling route for making the combine harvester 1 travel backward within a range of the already-worked land 52 irrespective of the last inclined route 56. Furthermore, the route creation portion 47 may create a turning route for making the combine harvester 1 turn autonomously from the end point of the backward traveling route to the position of the next outermost periphery straight-ahead route 54b in the already-worked land 52.

Also, when the autonomous traveling mode is set, the route creation portion 47 creates an autonomous travel route (not shown) along which autonomous reaping traveling is to be performed in the farm field selected by the farm field selection portion 46, stores the autonomous travel route in the terminal-side storage portion 42, and transmits the autonomous travel route to the combine harvester 1 via the terminal-side communication portion 43. The route creation portion 47 creates, with respect to the farm field, a plurality of straight-ahead routes along which reaping is to be performed while performing the traveling in a forward direction according to the traveling pattern (reciprocating reaping or round reaping) selected by an operation of the mobile terminal 40, and combines the plurality of straight-ahead routes with a plurality of turning routes, which connect to each of the straight-ahead routes, thereby creating the autonomous travel route.

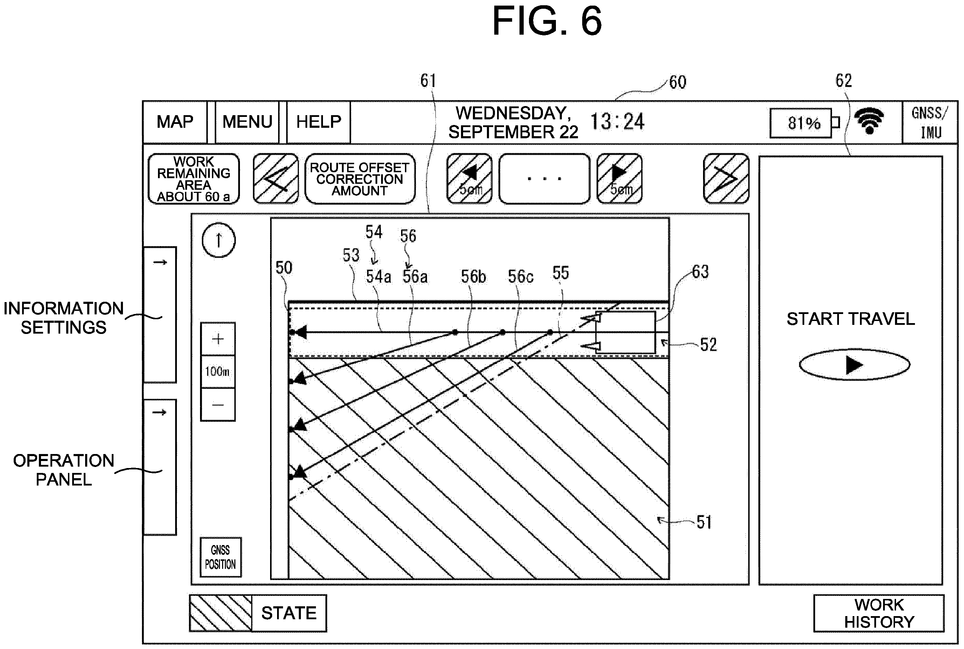

When the manual traveling mode or the autonomous straight-ahead mode is set, after a farm field, which is a work target, has been selected by the farm field selection portion 46, the display control portion 48 controls the display portion 44 to display a work screen 60 to perform the outer periphery reaping traveling of the farm field, as illustrated in FIG. 6. The display control portion 48 at least displays a map field 61, and also displays a travel start button 62 operably, on the work screen 60. In the map field 61, the display control portion 48 displays the farm field outline 50 on a map, on the basis of the farm field information on the farm field, and further displays a one's own vehicle mark 63 of the combine harvester 1 at the vehicle position of the combine harvester 1 itself measured by the positioning unit 28 of the combine harvester 1. The display control portion 48 may display the unworked land 51 and the already-worked land 52 to be distinguishable from each other within a range of the farm field outline 50 by varying the display method, such as a line type, a line color, and a background color. The display control portion 48 updates the position of the one's own vehicle mark 63 and the ranges of the unworked land 51 and the already-worked land 52 according to the progress of the reaping traveling of the combine harvester 1.

When the autonomous straight-ahead mode is set, the display control portion 48 displays the autonomous straight-ahead route 54 created by the route creation portion 47 in such a way as to overlap the farm field outline 50 in the map field 61 of the work screen 60. For example, when the combine harvester 1 is to perform autonomous straight-ahead traveling on the outermost periphery straight-ahead route 54a corresponding to the autonomous straight-ahead route 54, the display control portion 48 displays the aforementioned outermost periphery straight-ahead route 54a.

When a start condition for traveling on the outermost periphery straight-ahead route 54a is satisfied, the display control portion 48 allows the travel start button 62 to be selectively operated in order to start the autonomous straight-ahead traveling. Meanwhile, when the start condition is not satisfied, the display control portion 48 disables the travel start button 62 from being selectively operated. When the travel start button 62 is selectively operated, the display control portion 48 transmits the farm field information and information related to the outermost periphery straight-ahead route 54a to the combine harvester 1, together with an instruction to start the autonomous straight-ahead traveling on the outermost periphery straight-ahead route 54a. In response to the start instruction, the combine harvester 1 starts the autonomous straight-ahead traveling along the outermost periphery straight-ahead route 54a. For example, the start condition for traveling on the outermost periphery straight-ahead route 54a may be a condition in which the combine harvester 1 is positioned in the vicinity of a start point on the outermost periphery straight-ahead route 54a, and is oriented in a direction of travel on the outermost periphery straight-ahead route 54a.

When the combine harvester 1 is to perform the autonomous straight-ahead traveling on the outermost periphery straight-ahead route 54a, the display control portion 48 may display, in the map field 61, the turning necessary area 55 set with respect to the outermost periphery straight-ahead route 54a by the route creation portion 47 in such a way as to overlap the farm field outline 50. The display control portion 48 may receive a setting operation of whether or not to display the turning necessary area 55 on the work screen 60 or other setting screens. Also, the display control portion 48 may receive a setting operation of setting the turning necessary area 55 on the work screen 60 or other setting screens.

When the manual traveling mode or autonomous straight-ahead mode is set, the display control portion 48 displays the inclined route 56 created by the route creation portion 47 in such a way as to overlap the farm field outline 50 in the map field 61. The display control portion 48 receives a selection operation of selecting the start point setting mode for the inclined route 56 on the work screen 60 or other setting screens. The display control portion 48 may receive a setting operation of setting a predetermined angle of the inclined route 56 on the work screen 60 or other setting screens. For example, the predetermined angle may be allowed to be set according to an operation of a physical switch such as a dial switch provided on the input portion 45 or a touch operation on a touch panel which functions as the input portion 45.

When the start point setting mode for the inclined route 56 is the predefined position mode, the display control portion 48 displays a plurality of inclined routes 56 created with respect to the turning necessary area 55. Further, when the start point setting mode for the inclined route 56 is the one's own vehicle position mode, the display control portion 48 displays the inclined route 56 based on the vehicle position of the combine harvester 1 itself. The display control portion 48 may clear the display of the inclined route 56 along which the reaping traveling is finished. Also, in the case of the predefined position mode, the display control portion 48 may receive a setting operation of setting the travel order of the created predetermined number of inclined routes 56 on the work screen 60 or other setting screens. Alternatively, the display control portion 48 displays the created predetermined number of inclined routes 56 on the work screen 60 or other setting screens in such a way that the inclined routes 56 can be selected, and allows selection of the inclined route 56 along which autonomous straight-ahead traveling is to be performed. The display control portion 48 may allow selection of the travel order as to whether to perform traveling along the predetermined number of inclined routes 56 in the set travel order or in the order of selection according to a predetermined operation on the work screen 60 or other setting screens. The display control portion 48 may display only the inclined route 56 along which the autonomous straight-ahead traveling is to be performed among the predetermined number of inclined routes 56.

When a start condition for traveling on the inclined route 56 is satisfied, the display control portion 48 allows the travel start button 62 to be selectively operated in order to start the autonomous straight-ahead traveling. Meanwhile, when the start condition is not satisfied, the display control portion 48 disables the travel start button 62 from being selectively operated. When the travel start button 62 is selectively operated, the display control portion 48 transmits the farm field information and information related to the inclined route 56 to the combine harvester 1, together with an instruction to start the autonomous straight-ahead traveling on the inclined route 56. In response to the start instruction, the combine harvester 1 starts the autonomous straight-ahead traveling along the inclined route 56.

For example, the start condition for traveling on the inclined route 56 may be a condition in which the combine harvester 1 is positioned in the vicinity of a start point on the inclined route 56, and is oriented at a predetermined angle of the inclined route 56. In this case, the combine harvester 1 is moved from the outermost periphery straight-ahead route 54a to the start point of the inclined route 56 according to a manual operation, and turned such that the orientation of the combine harvester 1 conforms to the predetermined angle of the inclined route 56. The combine harvester 1 may be gradually turned so that the orientation is changed to the predetermined angle, or may change the orientation to the predetermined angle by a pivot turn. A tolerance between the orientation of the combine harvester 1 and the predetermined angle of the inclined route 56 may be set to a minimum.

Normally, when the combine harvester 1 overlaps the farm field outline 50, it is determined that a start condition for autonomous straight-ahead traveling is not satisfied. However, when the orientation of the combine harvester 1 is adjusted to the predetermined angle of the inclined route 56, the start condition for traveling on the inclined route 56 may be determined as being satisfied even if the combine harvester 1 overlaps the farm field outline 50.

Other than the above, as the start condition for traveling on the inclined route 56, when the combine harvester 1 is positioned in the vicinity of the start point on the inclined route 56 and is oriented at a predetermined angle of the inclined route 56, the combine harvester 1 may start the autonomous straight-ahead traveling on the inclined route 56, irrespective of the operation of the travel start button 62, according to an operation of the work operation portion to lower the reaping portion 3 to a reaping position.

Alternatively, the start condition for traveling on the inclined route 56 may be a condition in which combine harvester 1 is traveling backward more to the back side than the start point of the inclined route 56 on the outermost periphery straight-ahead route 54a. In this case, the combine harvester 1 is controlled such that after performing forward traveling autonomously to the start point of the inclined route 56 on the outermost periphery straight-ahead route 54a in response to a start instruction, the combine harvester 1 is autonomously turned toward the inclined route 56 in the vicinity of the start point of the inclined route 56, and performs the autonomous straight-ahead traveling along the inclined route 56. The combine harvester 1 may perform control to change the orientation of the combine harvester 1, with the outermost periphery straight-ahead route 54a and the inclined route 56 being used as they are, as a route from the outermost periphery straight-ahead route 54a to the inclined route 56, or may use the inclined route 56 as it is and also newly create a route for enabling a turn from the outermost periphery straight-ahead route 54a to the inclined route 56.

When the autonomous straight-ahead traveling on the current outermost periphery straight-ahead route 54a is finished, and further, reaping traveling on the inclined route 56 that has been created in the turning necessary area 55 set with respect to the current outermost periphery straight-ahead route 54a is finished, so that the already-worked land 52 is secured in the turning necessary area 55, the display control portion 48 clears, as illustrated in FIG. 7, the display of the current outermost periphery straight-ahead route 54a and the inclined route 56 on the work screen 60, and displays the next outermost periphery straight-ahead route 54b. Further, when the combine harvester 1 is to be moved autonomously to the next outermost periphery straight-ahead route 54b, the display control portion 48 may display a backward traveling route for making the combine harvester 1 travel backward from an end point of the last inclined route 56, or a turning route for making the combine harvester 1 turn from an end point of the backward traveling route to the next outermost periphery straight-ahead route 54b. The display control portion 48 may allow selection of whether to display the backward traveling route or the turning route according to a selection operation by the worker.

Also, when the outer periphery reaping traveling of the combine harvester 1 is finished and the autonomous traveling mode is set, the display control portion 48 displays the autonomous travel route (not shown) created by the route creation portion 47 in such a way as to overlap the farm field outline 50 in the map field 61 of the work screen 60.

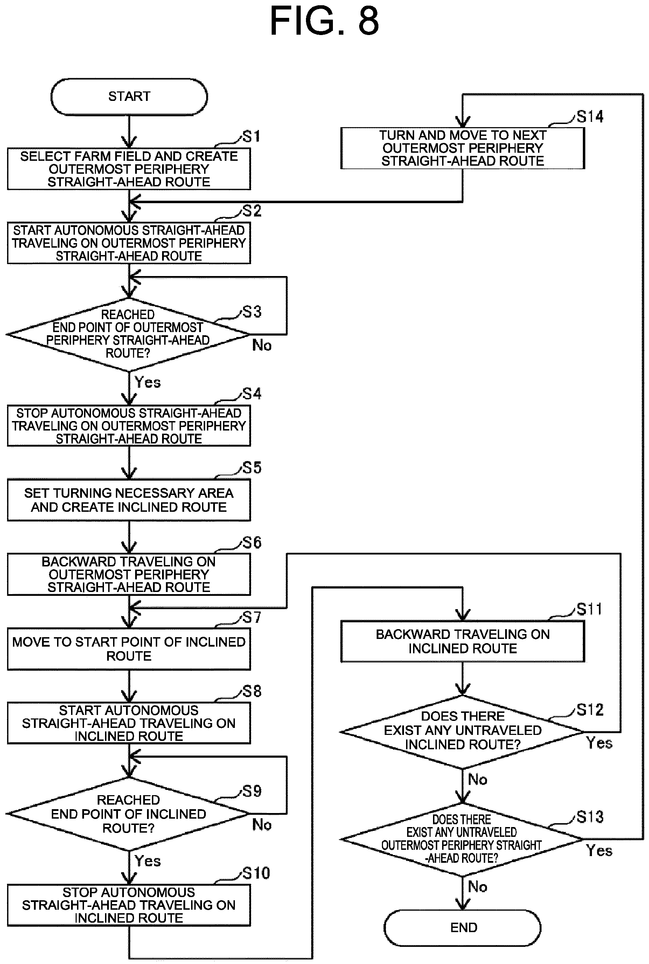

Next, an example of an action of outer periphery reaping traveling of the combine harvester 1 according to the present embodiment will be described with reference to a flowchart of FIG. 8.

In the combine harvester 1, it is assumed that the autonomous straight-ahead mode is set as the traveling mode, and the predefined position mode is set as the start point setting mode for the inclined route 56. First, in the mobile terminal 40, the farm field selection portion 46 selects a farm field, which is a work target, from the farm field information that is set in advance and stored in the terminal-side storage portion 42, and the route creation portion 47 creates the autonomous straight-ahead route 54 that is parallel to the external side of the farm field, in which the autonomous straight-ahead route 54 includes the outermost periphery straight-ahead route 54a (step S1).

The combine harvester 1 starts autonomous straight-ahead traveling on the outermost periphery straight-ahead route 54a according to the operation of the travel start button 62 on the work screen 60 of the mobile terminal 40 (step S2). When the combine harvester 1 reaches the end point of the outermost periphery straight-ahead route 54a (step S3: Yes), the combine harvester 1 stops the autonomous straight-ahead traveling according to the operation of the travel operation portion (step S4). At this time, the route creation portion 47 sets the turning necessary area 55 and also creates a predetermined number of inclined routes 56 with respect to the outermost periphery straight-ahead route 54a on which the autonomous straight-ahead traveling has been performed (step S5). In addition, the combine harvester 1 selects, from among the predetermined number of inclined routes 56, the inclined route 56 on which reaping traveling is to be performed, on the basis of the set travel order, and selects, for example, the inclined route 56 that is closest to the outermost periphery straight-ahead route 54a.

Further, the combine harvester 1 starts backward traveling from the end point of the outermost periphery straight-ahead route 54a according to the operation of the travel operation portion (step S6), and stops the backward traveling according to the operation of the travel operation portion after passing the start point of the inclined route 56. The combine harvester 1 moves to the start point of the inclined route 56 according to a manual operation of the travel operation portion (step S7), and makes a turn such that the orientation of the combine harvester 1 conforms to a predetermined angle of the inclined route 56.

The combine harvester 1 starts autonomous straight-ahead traveling on the inclined route 56 according to the operation of the travel start button 62 on the work screen 60 of the mobile terminal 40 (step S8). When the combine harvester 1 reaches the end point of the inclined route 56 (step S9: Yes), the combine harvester 1 stops the autonomous straight-ahead traveling according to the operation of the travel operation portion (step S10). Further, the combine harvester 1 starts backward traveling from the end point of the inclined route 56 according to the operation of the travel operation portion (step S 11), and stops the backward traveling according to the operation of the travel operation portion when the combine harvester 1 reaches the start point of the inclined route 56.

Further, if there exists an inclined route 56 on which the reaping traveling has not been performed (step S12: Yes), the combine harvester 1 selects, on the basis of the set travel order, the inclined route 56 next closest to the outermost periphery straight-ahead route 54a as the inclined route 56 on which the reaping traveling is to be performed, and repeats the reaping traveling on the inclined route 56 as described above (step S7). Further, if there does not exist any inclined route 56 on which the reaping traveling has not been performed (step S12: No), in a case where there is the next outermost periphery straight-ahead route 54b on which autonomous straight-ahead traveling has not been performed (step S13: Yes), the combine harvester 1 makes a turn and moves to the next outermost periphery straight-ahead route 54b according to the manual operation of the travel operation portion (step S14). Then, when a condition for proceeding to the next autonomous straight-ahead route 54b (e.g., at least one's own vehicle position relative to the next autonomous straight-ahead route 54b is within a predetermined lateral deviation and/or within a predetermined azimuth angle) is satisfied, the combine harvester 1 proceeds to the autonomous straight-ahead traveling on the next outermost periphery straight-ahead route 54b and performs the reaping traveling either automatically or according to a start operation of the travel operation portion or the input portion 45 by the worker (step S2). If there is no next outermost periphery straight-ahead route 54b on which autonomous straight-ahead traveling has not been performed (step S13: No), the combine harvester 1 ends the action. Alternatively, if there is no next outermost periphery straight-ahead route 54b on which autonomous straight-ahead traveling has not been performed (step S13: No), the combine harvester 1 may proceed to the autonomous straight-ahead route 54 for circling around on the inner side of the outermost periphery straight-ahead route 54a (i.e., the autonomous straight-ahead route 54 of the second and subsequent rounds) by autonomous traveling.

In the example of the action of the outer periphery reaping traveling described above, the combine harvester 1 may automatically perform an action which involves a worker's operation by means of the travel control portion 35 irrespectively of the worker's operation. For example, in the autonomous straight-ahead traveling on the outermost periphery straight-ahead route 54a (step S2), when the combine harvester 1 has detected arrival at the end point of the outermost periphery straight-ahead route 54a (step S3: Yes), the autonomous straight-ahead traveling may be automatically stopped (step S4). The combine harvester 1 may automatically perform the backward traveling from the end point of the outermost periphery straight-ahead route 54a (step S6) when it is detected that the combine harvester 1 has stopped at the end point of the outermost periphery straight-ahead route 54a. Further, the combine harvester 1 may automatically stop the backward traveling when it is detected that the combine harvester 1 has passed the start point of the inclined route 56 in the backward traveling. The combine harvester 1 may automatically perform the moving to the start point of the inclined route 56 (step S7) when it is detected that the backward traveling conducted immediately before has been stopped, and may automatically perform the turning to a predetermined angle of the inclined route 56.

Further, the combine harvester 1 may start the autonomous straight-ahead traveling on the inclined route 56 (step S8) according to completion of preparation at the start point of the inclined route 56 as described above. Furthermore, if arrival at the end point of the inclined route 56 is detected (step S9: Yes), the combine harvester 1 may automatically stop the autonomous straight-ahead traveling (step S10). The combine harvester 1 may automatically perform the backward traveling from the end point of the inclined route 56 (step S11) when it is detected that the combine harvester 1 has stopped at the end point of the inclined route 56. Further, the combine harvester 1 may automatically stop the backward traveling when it is detected that the combine harvester 1 has reached the start point of the inclined route 56 in the backward traveling. Further, when completion of the reaping traveling on all of the inclined routes 56 is detected, the combine harvester 1 may automatically perform the moving to the next outermost periphery straight-ahead route 54b.

As described above, according to the present embodiment, the combine harvester 1 is a work vehicle that performs autonomous traveling in a farm field and is provided with the control device 30 and the mobile terminal 40, and the mobile terminal 40 is provided with the terminal-side control device 41. The control device 30 functions as the travel control portion 35, and the terminal-side control device 41 functions as the route creation portion 47. The travel control portion 35 performs control to enable traveling on a plurality of outermost periphery straight-ahead routes 54a extending along a plurality of sides constituting the farm field outline 50, respectively. The route creation portion 47 sets, on the basis of the machine body information of the combine harvester 1, the turning necessary area 55 which is necessary for a turn from one outermost periphery straight-ahead route 54a to the next outermost periphery straight-ahead route 54b. Also, the route creation portion 47 creates, from a predetermined start point set on the one outermost periphery straight-ahead route 54a toward the unworked land 51 adjacent to the already-worked land 52 which is formed by the traveling based on the one outermost periphery straight-ahead route 54a, a predetermined number of inclined routes 56, which are inclined at a predetermined angle relative to the one outermost periphery straight-ahead route 54a, in the turning necessary area 55. The travel control portion 35 performs control to enable autonomous straight-ahead traveling along the inclined route 56.

In other words, in the present invention, an autonomous travel method for a work vehicle such as the combine harvester 1 that performs autonomous traveling in a farm field includes: an outermost periphery traveling step of traveling on a plurality of outermost periphery straight-ahead routes 54a extending along a plurality of sides constituting the farm field outline 50, respectively; an area setting step of setting, on the basis of machine body information of the combine harvester 1, the turning necessary area 55 which is necessary for a turn from one outermost periphery straight-ahead route 54a to the next outermost periphery straight-ahead route 54b; a route creation step of creating, from a predetermined start point set on the one outermost periphery straight-ahead route 54a toward the unworked land 51 adjacent to the already-worked land 52 which is formed by traveling based on the one outermost periphery straight-ahead route 54a, a predetermined number of inclined routes 56, which are inclined at a predetermined angle relative to the one outermost periphery straight-ahead route 54a, in the turning necessary area 55; and an inclined traveling step of performing autonomous straight-ahead traveling along the inclined route 56.

As a result, the combine harvester 1 automatically sets the inclined route 56 with respect to the turning necessary area 55 and performs the autonomous straight-ahead traveling on the inclined route 56 set with respect to the turning necessary area 55, whereby an operation burden on the worker necessitated by the setting of the inclined route 56 and the traveling on the inclined route 56 can be reduced. Further, since the turning necessary area 55 can be efficiently secured as the already-worked land 52, it is possible to smoothly proceed from the one outermost periphery straight-ahead route 54a to the next outermost periphery straight-ahead route 54b, and the time required for outer reaping traveling is reduced so that the work efficiency can be improved.

Further, according to the present embodiment, the route creation portion 47 creates the inclined route 56 when the combine harvester 1 has reached the end point of the one outermost periphery straight-ahead route 54a by traveling based on the one outermost periphery straight-ahead route 54a.

By this feature, the combine harvester 1 can create the inclined route 56 after more accurately ascertaining the farm field outline 50.

Further, according to the present embodiment, the route creation portion 47 acquires the farm field outline 50, and also creates the inclined route 56 when the outermost periphery straight-ahead route 54a is set on the basis of the farm field outline 50.

By this feature, the combine harvester 1 can ascertain the inclined route 56 in advance, and can smoothly proceed to the inclined route 56.

Further, according to the present embodiment, the route creation portion 47 creates a plurality of inclined routes 56 inclined at a plurality of predetermined angles that are different from one another relative to the one outermost periphery straight-ahead route 54a, and the combine harvester 1 allows selection of the inclined route 56 along which autonomous traveling is to be performed from among the plurality of inclined routes 56 according to a predetermined selection operation.

By this feature, since the inclined route 56 to be traveled can be selected, a degree of freedom of work can be improved.

Further, according to the present embodiment, the route creation portion 47 creates a plurality of inclined routes 56 inclined at a plurality of predetermined angles that are different from one another relative to the one outermost periphery straight-ahead route 54a, and sets a travel order in which autonomous traveling is to be performed on the plurality of inclined routes 56.

By this feature, it is possible to reduce an operation burden on the worker necessitated by the setting of the inclined route 56 and the traveling on the inclined route 56, and improve the work efficiency.

Further, according to the present embodiment, the route creation portion 47 allows the predetermined angle of the inclined route 56 to be set according to a predetermined setting operation.

By this feature, since the predetermined angle of the inclined route 56 to be traveled can be set, a degree of freedom of work can be improved.

Further, according to the present embodiment, the route creation portion 47 sets the predetermined angle of the inclined route 56 according to a work width of the combine harvester 1.

By this feature, it is possible to appropriately set the predetermined angle of the inclined route 56 according to the combine harvester 1, and reduce an operation burden on the worker necessitated by the setting of the inclined route 56 so that the work efficiency can be improved.

Further, according to the present embodiment, the route creation portion 47 creates the inclined route 56 by setting a predetermined start point at a position where the combine harvester 1 is stopped when performing backward traveling after reaching the end point of the one outermost periphery straight-ahead route 54a by forward traveling based on the one outermost periphery straight-ahead route 54a.

By this feature, the inclined route 56 can be created according to the position intended by the worker, and a degree of freedom of work can be improved.

Further, according to the present embodiment, the route creation portion 47 creates the inclined route 56 by setting the predetermined start point such that the combine harvester 1 does not overlap the farm field outline 50 when the combine harvester 1 is inclined at the predetermined angle.

By this feature, the combine harvester 1 can be prevented from contacting a ridge or the like that is outside the farm field.

Further, according to the present embodiment, the terminal-side control device 41 functions as the display control portion 48 which displays the outermost periphery straight-ahead route 54a on which traveling is to be performed on a display screen such as the work screen 60. The display control portion 48 displays, when the already-worked land 52 is secured in the turning necessary area 55 by autonomous traveling on the inclined route 56 that has been created in the turning necessary area 55 set with respect to the one outermost periphery straight-ahead route 54a, the next outermost periphery straight-ahead route 54b on the work screen 60.

By this feature, when the already-worked land 52 is secured in the turning necessary area 55 with respect to the current outermost periphery straight-ahead route 54a, the next outermost periphery straight-ahead route 54b is displayed on the work screen 60. Consequently, it is possible to smoothly proceed to the autonomous straight-ahead traveling on the next outermost periphery straight-ahead route 54b, and workability can be improved.

In the above-described embodiment, a description is given for an example in which the route creation portion 47 creates a plurality of autonomous straight-ahead routes 54 along the reference line 53 based on one external side of the farm field outline 50, thereby setting the outermost periphery straight-ahead route 54a. However, the present invention is not limited to this example. In another example, the route creation portion 47 may create a plurality of outermost periphery straight-ahead routes 54a extending along a plurality of reference lines 53 based on a plurality of external sides constituting the farm field outline 50, respectively.

Further, in the above-described embodiment, as illustrated in FIGS. 3 to 5, an example in which the route creation portion 47 creates the inclined route 56 of a linear shape has been described. However, the present invention is not limited to this example. In another example, the route creation portion 47 may create the inclined route 56 having a straight line and a curved line or the inclined route 56 of a curved shape.

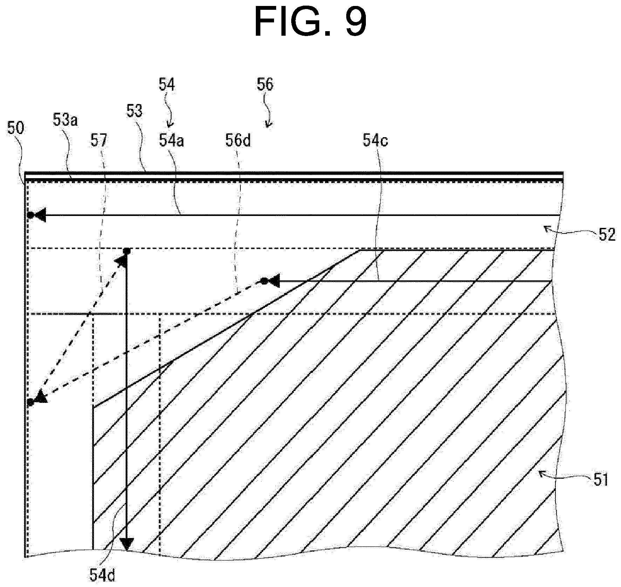

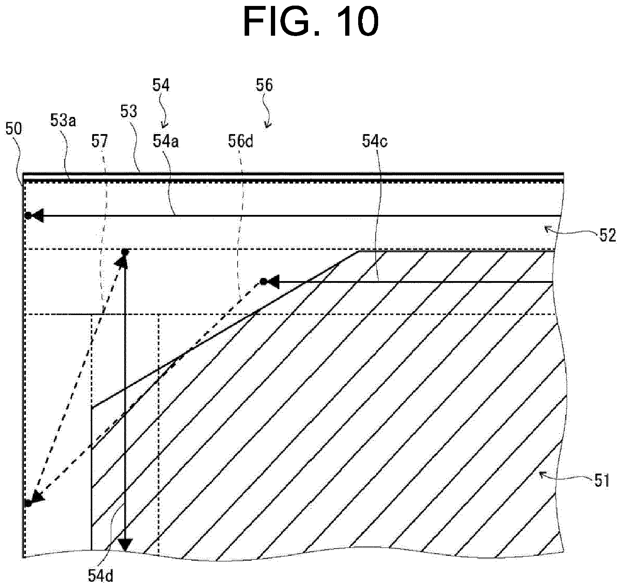

In the above-described embodiment, when the combine harvester 1 completes the autonomous straight-ahead traveling along the inclined routes 56a, 56b, and 56c with respect to the outermost periphery straight-ahead route 54a, the already-worked land 52 is widened, as illustrated in FIGS. 9 and 10. However, even with such a widened already-worked land 52, the already-worked land 52 may be insufficient as an area in which the combine harvester 1 makes a turn for the autonomous straight-ahead route 54 on the inner side of the outermost periphery straight-ahead route 54a (i.e., the autonomous straight-ahead route 54 of the second and subsequent rounds).

Therefore, in another example, as illustrated in FIGS. 9 and 10, the route creation portion 47 further creates an inclined route 56d for enabling a turn from one autonomous straight-ahead route 54c to the next autonomous straight-ahead route 54d in the autonomous straight-ahead route 54 on the inner side of the outermost periphery straight-ahead route 54a (i.e., the autonomous straight-ahead route 54 of the second and subsequent rounds). That is, a start point of the inclined route 56d is set at an end point of the one autonomous straight-ahead route 54c.

Further, the route creation portion 47 creates a backward traveling route 57 along which backward traveling is to be performed from an end point of the inclined route 56d toward an extension line of the next autonomous straight-ahead route 54d.

For example, as illustrated in FIG. 9, the route creation portion 47 creates the inclined route 56d, which passes through the already-worked land 52 so as not to cause damage to the farm field from the end point of the one autonomous straight-ahead route 54c toward the next autonomous straight-ahead route 54d, and is gently inclined with respect to the one autonomous straight-ahead route 54c. On such an inclined route 56d, autonomous straight-ahead traveling of moving with the reaping portion 3 being raised is performed. Alternatively, as illustrated in FIG. 10, the route creation portion 47 creates the inclined route 56d which involves reaping traveling for the unworked land 51 from the end point of the one autonomous straight-ahead route 54c toward the next autonomous straight-ahead route 54d.

The route creation portion 47 creates the inclined route 56d and the backward traveling route 57 at the timing of a start or during execution of the autonomous straight-ahead traveling on the one autonomous straight-ahead route 54c, or at the timing of an end (at the time of reap run through) of the unworked land 51.

The route creation portion 47 may automatically set the end point of the one autonomous straight-ahead route 54c, which serves as the start point of the inclined route 56d, on the basis of, for example, a positional relationship between the unworked land 51 and the already-worked land 52.

Alternatively, the route creation portion 47 may determine a position at which the worker has raised the reaping portion 3 or a position at which the reaping portion 3 no longer detects unreaped grain culms by a sensor as being a position at an end (at the time of reap run through) of the unworked land 51 in the autonomous straight-ahead traveling on the one autonomous straight-ahead route 54c, and may set the position to the end point of the one autonomous straight-ahead route 54c. When creating the inclined route 56d which passes through the already-worked land 52 as illustrated in FIG. 9, the route creation portion 47 may set the end point of the one autonomous straight-ahead route 54c more to the forward direction side than the position reached at the time of reap run through of the unworked land 51.

The route creation portion 47 sets the end point of the inclined route 56d at a position beyond the intersection of the inclined route 56d and the extension line of the next autonomous straight-ahead route 54d, and within the already-worked land 52. When the inclined route 56d which involves reaping traveling is to be created as illustrated in FIG. 10, the route creation portion 47 sets the end point of the inclined route 56d such that the reaping traveling is performed within a work width of the combine harvester 1 from a boundary between the unworked land 51 and the already-worked land 52.

The route creation portion 47 may set the predetermined angle of the inclined route 56d to a predefined value on the basis of the machine body information of the combine harvester 1, or may allow the predetermined angle of the inclined route 56d to be set according to a setting operation made via a predetermined display screen that is displayed on the display portion 44 or an operation of a physical switch provided on the input portion 45. When the predetermined angle of the inclined route 56d is to be set according to the operation by the worker, an upper limit of the predetermined angle may be set according to the machine body information of the combine harvester 1 and the vehicle speed set for the one autonomous straight-ahead route 54c.

The route creation portion 47 sets a start point of the backward traveling route 57 to the position of the end point of the inclined route 56d, and sets an end point of the backward traveling route 57 to a position that is on the extension line of the next autonomous straight-ahead route 54d and within the already-worked land 52. As illustrated in FIGS. 9 and 10, the route creation portion 47 creates the backward traveling route 57 which passes through the already-worked land 52, and is gently inclined with respect to both the inclined route 56d and the next autonomous straight-ahead route 54d.

While the route creation portion 47 may create the inclined route 56d and the backward traveling route 57 of a linear shape, the route creation portion 47 may alternatively create the inclined route 56d and the backward traveling route 57 having a straight line and a curved line, or the inclined route 56d and the backward traveling route 57 of a curved shape.

When the combine harvester 1 reaches the end point of the above-described one autonomous straight-ahead route 54c in autonomous straight-ahead traveling on the one autonomous straight-ahead route 54c, the travel control portion 35 stops the autonomous straight-ahead traveling on the one autonomous straight-ahead route 54c either according to an operation of the travel operation portion or automatically. When the combine harvester 1 has reached the end point of the one autonomous straight-ahead route 54c or before the combine harvester 1 reaches the end point of the one autonomous straight-ahead route 54c, the travel control portion 35 may notify the worker that the combine harvester 1 has reached the start point of the inclined route 56 by a display or voice output.

When the autonomous straight-ahead traveling on the one autonomous straight-ahead route 54c is stopped, the travel control portion 35 starts autonomous straight-ahead traveling on the inclined route 56d either according to a start operation of the travel operation portion or the input portion 45 by the worker or automatically. Alternatively, the travel control portion 35 may automatically start the autonomous straight-ahead traveling on the inclined route 56d without stopping when the autonomous straight-ahead traveling on the one autonomous straight-ahead route 54c is finished. In this case, the travel control portion 35 may perform control such that the combine harvester 1 is first decelerated on the basis of the inclined route 56d before reaching the end point of the one autonomous straight-ahead route 54c, and then proceeds to the autonomous straight-ahead traveling on the inclined route 56d. Note that, in a case where a manual operation of the travel operation portion (for example, a switch operation, a steering wheel operation, or the like) to switch to manual traveling is performed by the worker before autonomous straight-ahead traveling on the one autonomous straight-ahead route 54c is stopped, the travel control portion 35 may switch the traveling from autonomous traveling to manual traveling without stopping. By this feature, manual traveling as in the inclined route 56d can be performed without stopping the combine harvester 1. Also, when the combine harvester 1 reaches the end point of the inclined route 56d in autonomous straight-ahead traveling on the inclined route 56d, the travel control portion 35 stops the autonomous straight-ahead traveling on the inclined route 56d either according to an operation of the travel operation portion or automatically.

When the autonomous straight-ahead traveling on the inclined route 56d is stopped, the travel control portion 35 performs backward traveling on the backward traveling route 57 by autonomous traveling either according to a start operation of the travel operation portion or the input portion 45 by the worker or automatically. The combine harvester 1 may determine that switching is performed from the one autonomous straight-ahead route 54c to the other autonomous straight-ahead route 54d when the backward traveling on the backward traveling route 57 is performed in this way, and the display control portion 48 may switch the display of the one autonomous straight-ahead route 54c being displayed on the work screen 60 to the other autonomous straight-ahead route 54d. Also, when the combine harvester 1 reaches the end point of the backward traveling route 57 in autonomous traveling on the backward traveling route 57, the travel control portion 35 stops the manual traveling or the autonomous traveling on the backward traveling route 57 either according to an operation of the travel operation portion or automatically.

When the autonomous traveling on the backward traveling route 57 is stopped, the travel control portion 35 proceeds to the autonomous straight-ahead traveling on the next autonomous straight-ahead route 54d. Alternatively, the travel control portion 35 proceeds to the autonomous straight-ahead traveling on the next autonomous straight-ahead route 54d either automatically or according to a start operation of the travel operation portion or the input portion 45 by the worker, in a case where the autonomous traveling on the backward traveling route 57 is stopped and a condition for proceeding to the next autonomous straight-ahead route 54d (e.g., at least one's own vehicle position relative to the next autonomous straight-ahead route 54d is within a predetermined lateral deviation and/or within a predetermined azimuth angle) is satisfied.

The travel control portion 35 may allow selection of whether to perform traveling and stopping on each of the inclined route 56d and the backward traveling route 57 manually or automatically according to a selection operation by the worker.

Further, when autonomous straight-ahead traveling on the inclined route 56d, backward traveling in an autonomous way, and autonomous traveling on the backward traveling route 57 are to be performed, the travel control portion 35 performs travel control such that the combine harvester 1 does protrude to the outside of the farm field.

In the embodiment described above, an example of the combine harvester 1 configured as a head-feeding type combine harvester has been described. However, the present invention is not limited to the above example, and the combine harvester 1 may be configured as an ordinary-type combine harvester.

In the embodiment described above, an example in which the work vehicle is composed of the combine harvester 1 has been described, but the present invention is not limited to this example. For example, the work vehicle of the present invention may be composed of other farmwork machines for harvesting crops, or may be composed of a work vehicle other than the farmwork machine.

The present invention can be modified as appropriate to the extent of not being contradictory to the gist or idea of the invention that can be read from the claims and the specification as a whole. Thus, an autonomous travel method, a work vehicle and an autonomous travel system with such modifications are also included in the technical concept of the present invention.

### [Supplementary Notes of Invention]

A summary of the invention extracted from the above-described embodiment will be described below as supplementary notes. The components and processing functions described in the following supplementary notes can be selected or omitted and combined as desired.

### <Supplementary Note 1>

An autonomous travel method of a work vehicle which performs autonomous traveling in a farm field, the autonomous travel method comprising:
an outermost periphery traveling step of traveling on a plurality of outermost periphery straight-ahead routes extending along a plurality of sides constituting a farm field outline, respectively;
an area setting step of setting, based on machine body information of the work vehicle, a turning necessary area which is necessary for a turn from one outermost periphery straight-ahead route of the plurality of outermost periphery straight-ahead routes to a next outermost periphery straight-ahead route of the plurality of outermost periphery straight-ahead routes;
a route creation step of creating, from a predetermined start point set on the one outermost periphery straight-ahead route toward an unworked land adjacent to an already-worked land which is formed by traveling based on the one outermost periphery straight-ahead route, a predetermined number of inclined routes, which are inclined at a predetermined angle relative to the one outermost periphery straight-ahead route, in the turning necessary area; and
an inclined traveling step of performing autonomous straight-ahead traveling along the inclined route.

### <Supplementary Note 2>

The autonomous travel method according to Supplementary Note 1, wherein the route creation step creates the inclined route when an end point of the one outermost periphery straight-ahead route is reached by traveling based on the one outermost periphery straight-ahead route.

### <Supplementary Note 3>

The autonomous travel method according to Supplementary Note 1, wherein the route creation step acquires the farm field outline, and creates the inclined route when the outermost periphery straight-ahead route is set based on the farm field outline.

### <Supplementary Note 4>

The autonomous travel method according to any one of Supplementary Notes 1 to 3, wherein the route creation step comprises:
creating a plurality of inclined routes including the inclined route that are inclined at a plurality of predetermined angles including the predetermined angle different from one another relative to the one outermost periphery straight-ahead route; and
allowing selection of the inclined route along which autonomous traveling is to be performed from among the plurality of inclined routes according to a predetermined selection operation.

### <Supplementary Note 5>

The autonomous travel method according to any one of Supplementary Notes 1 to 3, wherein the route creation step creates a plurality of inclined routes including the inclined route that are inclined at a plurality of predetermined angles including the predetermined angle different from one another relative to the one outermost periphery straight-ahead route, and sets a travel order in which autonomous traveling is to be performed on the plurality of inclined routes.

### <Supplementary Note 6>

The autonomous travel method according to any one of Supplementary Notes 1 to 5, wherein the route creation step allows the predetermined angle of the inclined route to be set according to a predetermined setting operation.

### <Supplementary Note 7>

The autonomous travel method according to any one of Supplementary Notes 1 to 5, wherein the route creation step sets the predetermined angle of the inclined route according to a work width of the work vehicle.

### <Supplementary Note 8>

The autonomous travel method according to any one of Supplementary Notes 1 to 7, wherein the route creation step creates the inclined route by setting the predetermined start point at a position where the work vehicle is stopped when performing backward traveling after reaching an end point of the one outermost periphery straight-ahead route by forward traveling based on the one outermost periphery straight-ahead route.

### <Supplementary Note 9>

The autonomous travel method according to any one of Supplementary Notes 1 to 8, wherein the route creation step creates the inclined route by setting the predetermined start point such that the work vehicle is prevented from overlapping the farm field outline when the work vehicle is inclined at the predetermined angle.

### <Supplementary Note 10>

The autonomous travel method according to any one of Supplementary Notes 1 to 9, further comprising a display step of displaying the outermost periphery straight-ahead route to be traveled on a display screen, wherein
the display step displays the next outermost periphery straight-ahead route on the display screen when the already-worked land is secured in the turning necessary area by autonomous traveling on the inclined route, which has been created in the turning necessary area set with respect to the one outermost periphery straight-ahead route.

### <Supplementary Note 11>

A work vehicle which performs autonomous traveling in a farm field, the work vehicle comprising:
a travel control portion; and
a route creation portion, wherein:
the travel control portion performs control to enable traveling on a plurality of outermost periphery straight-ahead routes extending along a plurality of sides constituting a farm field outline, respectively;
the route creation portion sets, based on machine body information of the work vehicle, a turning necessary area which is necessary for a turn from one outermost periphery straight-ahead route of the plurality of outermost periphery straight-ahead routes to a next outermost periphery straight-ahead route of the plurality of outermost periphery straight-ahead routes;
the route creation portion creates, from a predetermined start point set on the one outermost periphery straight-ahead route toward an unworked land adjacent to an already-worked land which is formed by traveling based on the one outermost periphery straight-ahead route, a predetermined number of inclined routes, which are inclined at a predetermined angle relative to the one outermost periphery straight-ahead route, in the turning necessary area; and
the travel control portion performs control to enable autonomous straight-ahead traveling along the inclined route.

### <Supplementary Note 12>

The work vehicle according to Supplementary Note 11, wherein the route creation portion creates the inclined route when an end point of the one outermost periphery straight-ahead route is reached by traveling based on the one outermost periphery straight-ahead route.

### <Supplementary Note 13>

The work vehicle according to Supplementary Note 11, wherein the route creation portion acquires the farm field outline, and creates the inclined route when the outermost periphery straight-ahead route is set based on the farm field outline.

### <Supplementary Note 14>

The work vehicle according to any one of Supplementary Notes 11 to 13, wherein the route creation portion operates to: create a plurality of inclined routes including the inclined route that are inclined at a plurality of predetermined angles including the predetermined angle different from one another relative to the one outermost periphery straight-ahead route; and
allow selection of the inclined route along which autonomous traveling is to be performed from among the plurality of inclined routes according to a predetermined selection operation.

### <Supplementary Note 15>

The work vehicle according to any one of Supplementary Notes 11 to 13, wherein the route creation portion creates a plurality of inclined routes including the inclined route that are inclined at a plurality of predetermined angles including the predetermined angle different from one another relative to the one outermost periphery straight-ahead route, and sets a travel order in which autonomous traveling is to be performed on the plurality of inclined routes.

### <Supplementary Note 16>

The work vehicle according to any one of Supplementary Notes 11 to 15, wherein the route creation portion allows the predetermined angle of the inclined route to be set according to a predetermined setting operation.

### <Supplementary Note 17>

The work vehicle according to any one of Supplementary Notes 11 to 15, wherein the route creation portion sets the predetermined angle of the inclined route according to a work width of the work vehicle.

### <Supplementary Note 18>

The work vehicle according to any one of Supplementary Notes 11 to 17, wherein the route creation portion creates the inclined route by setting the predetermined start point at a position where the work vehicle is stopped when performing backward traveling after reaching an end point of the one outermost periphery straight-ahead route by forward traveling based on the one outermost periphery straight-ahead route.

### <Supplementary Note 19>

The work vehicle according to any one of Supplementary Notes 11 to 18, wherein the route creation portion creates the inclined route by setting the predetermined start point such that the work vehicle is prevented from overlapping the farm field outline when the work vehicle is inclined at the predetermined angle.

### <Supplementary Note 20>

The work vehicle according to any one of Supplementary Notes 11 to 19, further comprising a display control portion which displays the outermost periphery straight-ahead route to be traveled on a display screen, wherein
the display control portion displays the next outermost periphery straight-ahead route on the display screen when the already-worked land is secured in the turning necessary area by autonomous traveling on the inclined route, which has been created in the turning necessary area set with respect to the one outermost periphery straight-ahead route.

### <Supplementary Note 21>

An autonomous travel system which performs autonomous traveling in a farm field, the autonomous travel system comprising:
a travel control portion; and
a route creation portion, wherein:
   the travel control portion performs control to enable traveling on a plurality of outermost periphery straight-ahead routes extending along a plurality of sides constituting a farm field outline, respectively;
   the route creation portion sets, based on machine body information of a work vehicle, a turning necessary area which is necessary for a turn from one outermost periphery straight-ahead route of the plurality of outermost periphery straight-ahead routes to a next outermost periphery straight-ahead route of the plurality of outermost periphery straight-ahead routes;
   the route creation portion creates, from a predetermined start point set on the one outermost periphery straight-ahead route toward an unworked land adjacent to an already-worked land which is formed by traveling based on the one outermost periphery straight-ahead route, a predetermined number of inclined routes, which are inclined at a predetermined angle relative to the one outermost periphery straight-ahead route, in the turning necessary area; and
   the travel control portion performs control to enable autonomous straight-ahead traveling along the inclined route.

### <Supplementary Note 22>

The autonomous travel system according to Supplementary Note 21, wherein the route creation portion creates the inclined route when an end point of the one outermost periphery straight-ahead route is reached by traveling based on the one outermost periphery straight-ahead route.

### <Supplementary Note 23>

The autonomous travel system according to Supplementary Note 21, wherein the route creation portion acquires the farm field outline, and creates the inclined route when the outermost periphery straight-ahead route is set based on the farm field outline.

### <Supplementary Note 24>

The autonomous travel system according to any one of Supplementary Notes 21 to 23, wherein the route creation portion operates to:
create a plurality of inclined routes including the inclined route that are inclined at a plurality of predetermined angles including the predetermined angle different from one another relative to the one outermost periphery straight-ahead route; and
allow selection of the inclined route along which autonomous traveling is to be performed from among the plurality of inclined routes according to a predetermined selection operation.

### <Supplementary Note 25>

The autonomous travel system according to any one of Supplementary Notes 21 to 23, wherein the route creation portion creates a plurality of inclined routes including the inclined route that are inclined at a plurality of predetermined angles including the predetermined angle different from one another relative to the one outermost periphery straight-ahead route, and sets a travel order in which autonomous traveling is to be performed on the plurality of inclined routes.

### <Supplementary Note 26>

The autonomous travel system according to any one of Supplementary Notes 21 to 25, wherein the route creation portion allows the predetermined angle of the inclined route to be set according to a predetermined setting operation.

### <Supplementary Note 27>

The autonomous travel system according to any one of Supplementary Notes 21 to 25, wherein the route creation portion sets the predetermined angle of the inclined route according to a work width of the work vehicle.

### <Supplementary Note 28>

The autonomous travel system according to any one of Supplementary Notes 21 to 27, wherein the route creation portion creates the inclined route by setting the predetermined start point at a position where the work vehicle is stopped when performing backward traveling after reaching an end point of the one outermost periphery straight-ahead route by forward traveling based on the one outermost periphery straight-ahead route.

### <Supplementary Note 29>

The autonomous travel system according to any one of Supplementary Notes 21 to 28, wherein the route creation portion creates the inclined route by setting the predetermined start point such that the work vehicle is prevented from overlapping the farm field outline when the work vehicle is inclined at the predetermined angle.

### <Supplementary Note 30>

The autonomous travel system according to any one of Supplementary Notes 21 to 29, further comprising a display control portion which displays the outermost periphery straight-ahead route to be traveled on a display screen, wherein
the display control portion displays the next outermost periphery straight-ahead route on the display screen when the already-worked land is secured in the turning necessary area by autonomous traveling on the inclined route, which has been created in the turning necessary area set with respect to the one outermost periphery straight-ahead route.

### REFERENCE SIGNS LIST

- 1: Combine harvester (work vehicle)
- 2: Traveling portion
- 3: Reaping portion
- 30: Control device
- 35: Travel control portion
- 40: Mobile terminal
- 41: Terminal-side control device
- 44: Display portion
- 46: Farm field selection portion
- 47: Route creation portion
- 48: Display control portion
- 50: Farm field outline
- 51: Unworked land
- 52: Already-worked land
- 53: Reference line
- 54: Autonomous straight-ahead route
- 54a: Outermost periphery straight-ahead route
- 55: Turning necessary area
- 56, 56a, 56b, 56c: Inclined route

## Claims

1. An autonomous travel method of a work vehicle which performs autonomous traveling in a farm field, the autonomous travel method comprising:
an outermost periphery traveling step of traveling on a plurality of outermost periphery straight-ahead routes extending along a plurality of sides constituting a farm field outline, respectively;
an area setting step of setting, based on machine body information of the work vehicle, a turning necessary area which is necessary for a turn from one outermost periphery straight-ahead route of the plurality of outermost periphery straight-ahead routes to a next outermost periphery straight-ahead route of the plurality of outermost periphery straight-ahead routes;
a route creation step of creating, from a predetermined start point set on the one outermost periphery straight-ahead route toward an unworked land adjacent to an already-worked land which is formed by traveling based on the one outermost periphery straight-ahead route, a predetermined number of inclined routes, which are inclined at a predetermined angle relative to the one outermost periphery straight-ahead route, in the turning necessary area; and
an inclined traveling step of performing autonomous straight-ahead traveling along the inclined route.

2. The autonomous travel method according to claim 1, wherein the route creation step creates the inclined route when an end point of the one outermost periphery straight-ahead route is reached by traveling based on the one outermost periphery straight-ahead route.

3. The autonomous travel method according to claim 1, wherein the route creation step acquires the farm field outline, and creates the inclined route when the outermost periphery straight-ahead route is set based on the farm field outline.

4. The autonomous travel method according to any one of claims 1 to 3, wherein the route creation step comprises:
creating a plurality of inclined routes including the inclined route that are inclined at a plurality of predetermined angles including the predetermined angle different from one another relative to the one outermost periphery straight-ahead route; and
allowing selection of the inclined route along which autonomous traveling is to be performed from among the plurality of inclined routes according to a predetermined selection operation.

5. The autonomous travel method according to any one of claims 1 to 3, wherein the route creation step creates a plurality of inclined routes including the inclined route that are inclined at a plurality of predetermined angles including the predetermined angle different from one another relative to the one outermost periphery straight-ahead route, and sets a travel order in which autonomous traveling is to be performed on the plurality of inclined routes.

6. The autonomous travel method according to any one of claims 1 to 3, wherein the route creation step allows the predetermined angle of the inclined route to be set according to a predetermined setting operation.

7. The autonomous travel method according to any one of claims 1 to 3, wherein the route creation step sets the predetermined angle of the inclined route according to a work width of the work vehicle.

8. The autonomous travel method according to any one of claims 1 to 3, wherein the route creation step creates the inclined route by setting the predetermined start point at a position where the work vehicle is stopped when performing backward traveling after reaching an end point of the one outermost periphery straight-ahead route by forward traveling based on the one outermost periphery straight-ahead route.

9. The autonomous travel method according to any one of claims 1 to 3, wherein the route creation step creates the inclined route by setting the predetermined start point such that the work vehicle is prevented from overlapping the farm field outline when the work vehicle is inclined at the predetermined angle.

10. The autonomous travel method according to any one of claims 1 to 3, further comprising a display step of displaying the outermost periphery straight-ahead route to be traveled on a display screen, wherein
the display step displays the next outermost periphery straight-ahead route on the display screen when the already-worked land is secured in the turning necessary area by autonomous traveling on the inclined route, which has been created in the turning necessary area set with respect to the one outermost periphery straight-ahead route.

11. A work vehicle which performs autonomous traveling in a farm field, the work vehicle comprising:
a travel control portion; and
a route creation portion, wherein:
the travel control portion performs control to enable traveling on a plurality of outermost periphery straight-ahead routes extending along a plurality of sides constituting a farm field outline, respectively;
the route creation portion sets, based on machine body information of the work vehicle, a turning necessary area which is necessary for a turn from one outermost periphery straight-ahead route of the plurality of outermost periphery straight-ahead routes to a next outermost periphery straight-ahead route of the plurality of outermost periphery straight-ahead routes;
the route creation portion creates, from a predetermined start point set on the one outermost periphery straight-ahead route toward an unworked land adjacent to an already-worked land which is formed by traveling based on the one outermost periphery straight-ahead route, a predetermined number of inclined routes, which are inclined at a predetermined angle relative to the one outermost periphery straight-ahead route, in the turning necessary area; and
the travel control portion performs control to enable autonomous straight-ahead traveling along the inclined route.

12. An autonomous travel system of a work vehicle which performs autonomous traveling in a farm field, the autonomous travel system comprising:
a travel control portion; and
a route creation portion, wherein:
the travel control portion performs control to enable traveling on a plurality of outermost periphery straight-ahead routes extending along a plurality of sides constituting a farm field outline, respectively;
the route creation portion sets, based on machine body information of the work vehicle, a turning necessary area which is necessary for a turn from one outermost periphery straight-ahead route of the plurality of outermost periphery straight-ahead routes to a next outermost periphery straight-ahead route of the plurality of outermost periphery straight-ahead routes;
the route creation portion creates, from a predetermined start point set on the one outermost periphery straight-ahead route toward an unworked land adjacent to an already-worked land which is formed by traveling based on the one outermost periphery straight-ahead route, a predetermined number of inclined routes, which are inclined at a predetermined angle relative to the one outermost periphery straight-ahead route, in the turning necessary area; and
the travel control portion performs control to enable autonomous straight-ahead traveling along the inclined route.
